# EUROPEAN PATENT APPLICATION

(11) **EP 4 509 398 A1**
(43) Date of publication of application: **19.02.2025**
(21) Application number: 24193504.8
(22) Date of filing: 08.08.2024
(51) Int. Cl.: B64B 1/28, B64D 27/355, B64D 29/00

(54) **FUEL CELL AIRCRAFT THERMAL MANAGEMENT SYSTEM**

(30) Priority: 14.08.2023 US 202363519480 P; 20.03.2024 US 202418610868
(71) Applicant: The Boeing Company, Arlington, VA 22202 (US)
(72) Inventor: BALAN, Chellappa, Arlington, 22202 (US); STOIA, Michael F., Arlington, 22202 (US); AGUILAR, Charles, Arlington, 22202 (US); HOFFMAN, Drew Christopher, Arlington, 22202 (US)
(74) Representative: Lissandrini, Marco

(57) **Abstract**

An aircraft thermal management system comprising a high temperature loop and a low temperature loop. The high temperature loop is configured to manage a temperature of a fuel cell stack in a nacelle using a nacelle heat exchanger. The low temperature loop is configured to cool a number of heat loads in a nacelle using a heat capacity of liquid hydrogen.

## Description

### CROSS-REFERENCE TO RELATED APPLICATIONS

This application claims the benefit of U.S. Provisional Patent Application Serial No. 63/519,480, filed August 14, 2023, and entitled "Fuel Cell Aircraft Thermal Management System," as well as of U.S. Non Provisional Patent Application Serial No. 18/610,868 filed March 20, 2024, and entitled "Fuel Cell Aircraft Thermal Management System", which are both incorporated herein by reference in their entirety.

### BACKGROUND INFORMATION

### 1. Field:

The present disclosure relates generally to aircraft and in particular, to aircraft using propulsion systems powered using hydrogen fueled fuel cells.

### 2. Background:

Aircraft with electric propulsion systems is an emerging trend that can provide many benefits for the aviation industry. Electric aircraft can provide many environmental benefits. For example, electric aircraft produce zero emissions during flight which can reduce their carbon footprint.

Further, electric motors are generally quieter than combustion engines. As a result, noise pollution can be reduced with the use of these types of aircraft.

Electric aircraft have electric propulsion systems that can be powered using hydrogen. The hydrogen can be stored in tanks. The hydrogen stored in these tanks is typically in a liquid state and stored at extremely low temperatures such as -253 degrees °C.

The hydrogen in these fuel tanks can be stored as liquid hydrogen, gaseous hydrogen, or other hydrogen carriers such as methane or other hydrocarbons in liquid or gaseous state. A reformer can be used in a reformation process to remove hydrogen from hydrocarbon molecules.

The hydrogen in these fuel tanks can then be sent to fuel cells for use in generating electricity to power propulsion systems and other systems in aircraft. These fuel cells are electrochemical devices that convert the hydrogen and oxygen obtained from the air into electricity to power the propulsion systems in aircraft. These types of cells operate with high efficiency and minimal emissions with the byproduct being water vapor.

### SUMMARY

An embodiment of the present disclosure provides an aircraft thermal management system comprising a high temperature loop and a low temperature loop. The high temperature loop is configured to manage a temperature of a fuel cell stack in a nacelle using a nacelle heat exchanger. The low temperature loop is configured to cool a number of heat loads in a nacelle using a heat capacity of liquid hydrogen.

Another embodiment of the present disclosure provides an aircraft thermal management system comprising a ram air cooler in a nacelle, a fuel cell stack in the nacelle, and a conduit system configured to carry coolant. The ram air cooler in a nacelle comprises a nacelle heat exchanger and a set of fans configured to increase airflow through the nacelle heat exchanger. The conduit system comprises a high temperature loop and a low temperature loop. The high temperature loop is configured to remove heat from the fuel cell stack and send heat removed from the fuel cell stack into ambient air as part of exhaust air exiting the nacelle. The low temperature loop is configured to remove heat from a set of components in the nacelle using a heat capacity of liquid hydrogen.

Yet another embodiment of the present disclosure provides an aircraft comprising a fuselage; a first wing and a second wing connected to the fuselage; engines connected to the first wing and the second wing; liquid hydrogen tanks; a conduit system; a high temperature loop; and a low temperature loop. The liquid hydrogen tanks are configured to store liquid hydrogen. The liquid hydrogen tanks extend along an outside of the fuselage. Each engine in the engines comprises a nacelle; an electric motor within the nacelle; a fuel cell stack within the nacelle; and a ram air radiator within the nacelle. The ram air radiator is configured to receive air flowing through an inlet in the nacelle. The high temperature loop is configured to manage a temperature of the fuel cell stack using a nacelle heat exchanger. The low temperature loop is configured to cool a number of heat loads in the nacelle using a fuel system heat exchanger that cools a coolant using a heat capacity of liquid hydrogen.

Still another embodiment of the present disclosure provides a method for thermal management. A temperature of a fuel cell stack in a nacelle is managed using a nacelle heat exchanger in a high temperature loop. A number of heat loads in a nacelle is cooled in a low temperature loop cools the number of heat loads using a heat capacity of liquid hydrogen.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a hydrogen fuel cell vehicle with distributed propulsion systems in accordance with an illustrative embodiment;
**Figure 2** is an illustration of a front view of liquid hydrogen tank locations in accordance with an illustrative embodiment;
**Figure 3** is an illustration of a nacelle layout in accordance with an illustrative embodiment;
**Figure 4** is an illustration of a block diagram of a liquid hydrogen fuel cell aircraft in accordance with an illustrative embodiment;
**Figure 5** is an illustration of a block diagram of a heat exchanger system for an aircraft in accordance with an illustrative embodiment;
**Figure 6** is a cross-sectional view of a portion of a nacelle with a heat exchanger in accordance with an illustrative embodiment;
**Figure 7** is another illustration of a cross-sectional view of a portion of a nacelle with a nacelle heat exchanger in accordance with an illustrative embodiment;
**Figure 8** is another illustration of a cross-sectional view of a portion of a nacelle with the nacelle heat exchanger in accordance with an illustrative embodiment;
**Figure 9** is a pictorial illustration of an engine with a nacelle heat exchanger in accordance with an illustrative embodiment;
**Figure 10** is a pictorial illustration of an engine with a nacelle heat exchanger in accordance with an illustrative embodiment;
**Figure 11** is a pictorial illustration of an engine with a nacelle heat exchanger in accordance with an illustrative embodiment;
**Figure 12** is another pictorial illustration of an engine with a nacelle heat exchanger in accordance with an illustrative embodiment;
**Figure 13** is a schematic illustration of a fan configuration for use with a nacelle heat exchanger within a nacelle in points with an illustrative embodiment;
**Figure 14** is a cross-sectional view of a nacelle with a nacelle heat exchanger in accordance with an illustrative embodiment;
**Figure 15** is an illustration of airflow through a nacelle to provide cooling for a fuel cell stack in accordance with an illustrative embodiment;
**Figure 16** is an illustration of a front view of nacelle with a nacelle heat exchanger in accordance with an illustrative embodiment;
**Figure 17** is an illustration of a nacelle heat exchanger in accordance with an illustrative embodiment;
**Figure 18** is an illustration of airflow through a nacelle heat exchanger in accordance with an illustrative embodiment;
**Figure 19** is an illustration of a block diagram of a startup system for an aircraft in accordance with an illustrative embodiment;
**Figure 20** is an illustration of a flowchart of a process for managing starting and operation of fuel cell stacks for aircraft in accordance with an illustrative embodiment;
**Figure 21** is an illustration of a flowchart of a process for heating fuel cell stacks in accordance with an illustrative embodiment;
**Figure 22** is an illustration of a flowchart of a process for managing starting and operation of fuel cell stacks for aircraft in accordance with an illustrative embodiment;
**Figure 23** is an illustration of a flowchart of a process for circulating heated coolant in accordance with an illustrative embodiment;
**Figure 24** is an illustration of a flowchart of a process for sending power to fuel cell stacks in accordance with an illustrative embodiment;
**Figure 25** is an illustration of a flowchart of a process for halting heating of coolant in accordance with an illustrative embodiment;
**Figure 26** is an illustration of an aircraft with a propulsion and power system in accordance with an illustrative embodiment;
**Figure 27** is an illustration of an integrated power and propulsion unit in accordance with an illustrative embodiment;
**Figure 28** is an illustration of a schematic diagram of a fuel cell stack startup system in accordance with an illustrative embodiment;
**Figure 29** is an illustration of a schematic diagram of a fuel cell stack startup system in a thermal management system in accordance with an illustrative embodiment;
**Figure 30** is an illustration of a schematic diagram of a fuel cell stack startup system in a thermal management system in accordance with an illustrative embodiment;
**Figure 31** is an illustration of a block diagram of an aircraft management system in accordance with an illustrative embodiment;
**Figure 32** is an illustration of a flowchart of a process for air management in accordance with an illustrative embodiment;
**Figure 33** is an illustration of a schematic diagram of an aircraft air management system for fuel cell stack in accordance with an illustrative embodiment;
**Figure 34** is an illustration of a block diagram of an aircraft thermal management system in accordance with an illustrative embodiment;
**Figure 35** is an illustration of a flowchart of a process for thermal management in accordance with an illustrative embodiment;
**Figure 36** is an illustration of a flowchart of a process for managing the temperature of a fuel cell stack in accordance with an illustrative embodiment;
**Figure 37** is an illustration of a thermal management system with a low temperature loop and a high temperature loop in accordance with an illustrative embodiment;
**Figure 38** is an illustration of a hydrogen recirculating system in accordance with an illustrative embodiment;
**Figure 39** is an illustration of a flowchart of a process for recirculating hydrogen in accordance with an illustrative embodiment;
**Figure 40** is an illustration of a flowchart of a process for recirculating hydrogen in accordance with an illustrative embodiment;
**Figure 41** is an illustration of a flowchart of a process for recirculating hydrogen in accordance with an illustrative embodiment;
**Figure 42** is an illustration of a recirculating system for liquid hydrogen for tank pressure control in accordance with an illustrative embodiment;
**Figure 43** is an illustration of a venting system for gaseous hydrogen in accordance with an illustrative embodiment;
**Figure 44** is an illustration of a system for recirculating gaseous hydrogen for tank pressure control in accordance with an illustrative embodiment;
**Figure 45** is an illustration of a block diagram of an aircraft cooling system in accordance with an illustrative embodiment;
**Figure 46** is an illustration of a flowchart of a process for cooling heat loads in accordance with an illustrative embodiment;
**Figure 47** is an illustration of a flowchart of a process for cooling heat loads in accordance with an illustrative embodiment;
**Figure 48** is an illustration of a pumped two-phase (P2P) cooling loop in accordance with an illustrative embodiment;
**Figure 49** is an illustration of a hybrid two-phase (P2P) cooling loop in accordance with an illustrative embodiment; and
**Figure 50** is an illustration of a pumped two-phase (P2P) cooling loop with waste heat recovery in accordance with an illustrative embodiment.

### DETAILED DESCRIPTION

### 1. CONFIGURATION FOR A LH2 FUEL CELL AIRCRAFT WITH DISTRIBUTED SYSTEMS

The illustrative embodiments recognize and take into account a number of different issues with respect to aircraft that operate using liquid hydrogen fuel. The issues recognized by the different illustrative embodiments are described herein.

The illustrative embodiments recognize and take into account that integrating a liquid hydrogen (LH2) system into a passenger aircraft, such as a 50 passenger aircraft, can be challenging. For example, design challenges are present in determining where to locate the large liquid hydrogen tanks safely and how to package the thermal management and fuel cell stack systems, both of which have large volume requirements.

In these illustrative examples, the location of the fuel tanks ends above the wing and along the side of the fuselage. This type of configuration can integrate the tanks in a safe manner while keeping the added weight and wetted area as small as possible. In one illustrative example, six engine nacelles are used to add redundancy and enable packaging the thermal management and fuel cell system in a manner using as little volume in each nacelle as possible, while also reducing the electric motor power requirements.

Increased redundancy can occur through increasing the number of engines. As used herein, a "number of' when used with reference to items means one or more items. For example, a number of engines is one or more engines.

Further, the illustrative examples can use a high temperature proton exchange membrane fuel cell rather than a low temperature proton exchange membrane. The use of a high temperature proton exchange membrane fuel cell helps reduce heat exchanger sizing and a heat exchanger with microchannel flow passages which further reduces the size. Systems such as these are optional in the illustrative examples.

Additional conduits in a conduit system that lead from the liquid hydrogen tanks to the top of the vertical tail can be implemented. These conduits can be used to provide venting to relieve excess pressure in the liquid hydrogen tanks during flight. The conduit system can also be referred to as plumbing or a plumbing system in the different illustrative examples.

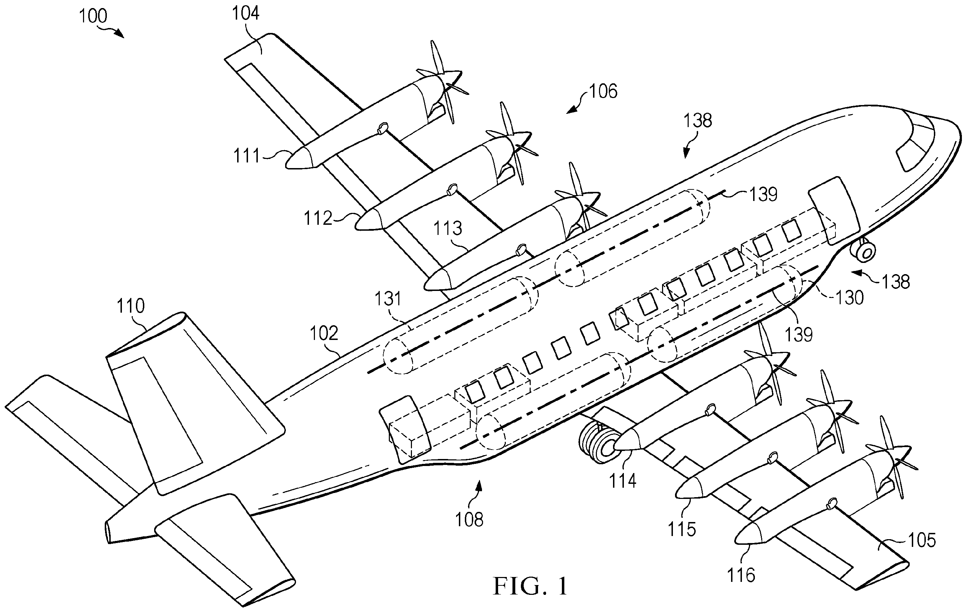

With reference to **Figure 1****,** an illustration of a hydrogen fuel cell vehicle with distributed propulsion systems is depicted in accordance with an illustrative embodiment. In the different illustrative examples, the same reference numeral may be used in more than one figure. This reuse of a reference numeral in different figures represents the same element in the different figures.

In this illustrative example, aircraft **100** is an example of a liquid hydrogen fuel cell vehicle. Aircraft **100** is an airplane that can carry various numbers of passengers. For example, aircraft **100** is an airplane designed to carry 50 passengers, 100 passengers, 130 passengers, or some other number of passengers. In other illustrative examples, aircraft **100** can be a cargo airplane or a cargo and passenger airplane.

As depicted in this example, aircraft **100** comprises fuselage **102** with wing **104** and wing **105.** In this example, engines **106** and liquid hydrogen tanks **108** are located on wing **104** and wing **105.** As depicted, engines **106** comprises six engines. Engine **111,** engine **112,** engine **113** are connected to wing **104,** and engine **114,** engine **115,** and engine **116** are connected to wing **105.**

In this example, when one component is "connected" to another component, the connection is a physical connection. For example, a first component, such as an engine, can be considered to be physically connected to a second component, such as a wing by at least one of being secured to the second component, bonded to the second component, mounted to the second component, welded to the second component, fastened to the second component, or connected to the second component in some other suitable manner. The first component also can be connected to the second component using a third component. The first component can also be considered to be physically connected to the second component by being formed as part of the second component, an extension of the second component, or both. In some examples, the first component can be physically connected to the second component by being located within the second component.

In this example, liquid hydrogen tanks **108** are connected to fuselage **102.** These liquid hydrogen tanks are located along the sides of fuselage **102** above wing **104.** These liquid hydrogen tanks have a substantially cylindrical shape. The liquid hydrogen tanks can also have other shapes such as an annular shape, a rounded rectangular prism, teardrop, or other suitable shape. In this example, liquid hydrogen tanks **108** are cryogenic tanks that carry liquid hydrogen.

In this example, liquid hydrogen tank **130** in liquid hydrogen tanks **108** is located above wing **105** and liquid hydrogen tank **131** in liquid hydrogen tanks **108** is located above wing **104.** The locations of liquid hydrogen tanks **108** are selected to provide desirable center of gravity (CG) characteristics for the aircraft **100.** As depicted in this example, liquid hydrogen tanks **108** are located below windows **138** in fuselage **102.** As depicted in this example, windows **138** are located along window lines **139** on fuselage **102.**

The location of these two liquid hydrogen tanks reduces wetted area by placing these fuel tanks against some surfaces of aircraft **100.** In other words, the surface area of fuselage **102** surrounding liquid hydrogen tanks **108** in contact with air during flight is reduced as compared to other locations that can be selected on aircraft **100.** By reducing this wetted area for fuselage **102** surrounding liquid hydrogen tanks **108,** improved aerodynamic performance can be achieved.

Further, the location of liquid hydrogen tanks **108** can protect these components from hard landings. Also, the location of liquid hydrogen tanks can protect these tanks from ground strike damage.

Further, in this example, six engines are used for aircraft **100.** Increasing the number of engines can enable greater distribution of different components for the thermal management system and other components in the engines into smaller components. These components can be located within the nacelle volume for the individual engines.

This distribution also provides an ability for using a blown wing for higher lift at lower speeds, increased redundancy, and lower power requirements for the electric motors. Further, by increasing the number of engines, the fuel cell stack sizes may be smaller in each engine.

Further, increased redundancy is present by using six engines rather than two or four engines. As the number of engines increases, electric motors can have smaller size and power requirements. In similar fashion, the heat exchangers within the nacelles for these engines can also be smaller in size. In a similar fashion, the number of fuel cells in a fuel cell stack can be smaller in size making it easier to package and integrate these components into aircraft **100.**

In this example, venting of gaseous hydrogen (GH2) from liquid hydrogen tanks **108** can be provided through conduits to the venting system. This venting system can vent the gaseous hydrogen out of an area that is remote and above passengers, crew, and ground personnel such as vertical tail **110.**

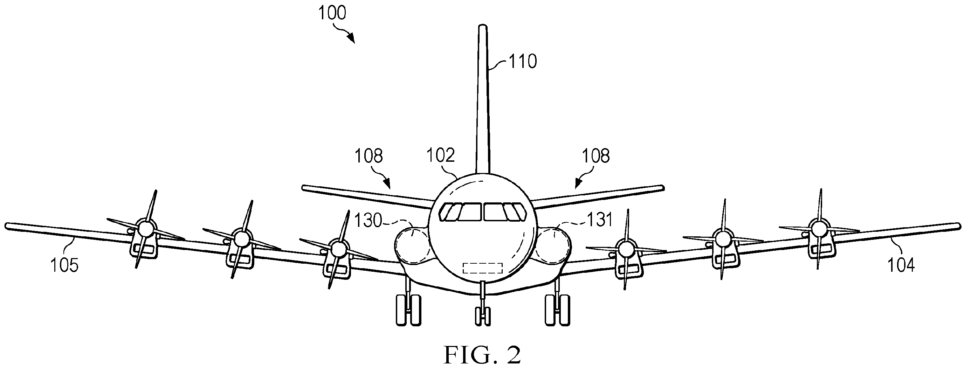

**Figure 2** is an illustration of a front view of liquid hydrogen tank locations in accordance with an illustrative embodiment. In this figure, a front view of aircraft **100** provides an additional view of the locations of liquid hydrogen tank **130** above wing **105** and liquid hydrogen tank **131** above wing **104.** As depicted, liquid hydrogen tank **131** is located above wing **104** and liquid hydrogen tank **130** is located above wing **105** on the sides of fuselage **102** for aircraft **100.**

These locations for liquid hydrogen tanks **108** can reduce trimming issues and hydrogen gas entrapment in the fuselage. Further, lower drag and weights of integrated liquid hydrogen tanks can be achieved with easier integration as compared to liquid hydrogen tanks used under the wing of an aircraft. Additional tanks can be used to reduce liquid sloshing and increase redundancy.

The illustration of aircraft **100** in **Figure 1** and **Figure 2** are provided as one illustrative example and is not meant to limit the manner in which other illustrative examples can be implemented. For example, although liquid hydrogen tanks **108** are shown as comprising two liquid hydrogen tanks, other illustrative examples can have other numbers of hydrogen fuel tanks. For example, liquid hydrogen tanks can include four liquid hydrogen tanks with two liquid hydrogen tanks being located over the wings and under the windows on either side of aircraft **100.**

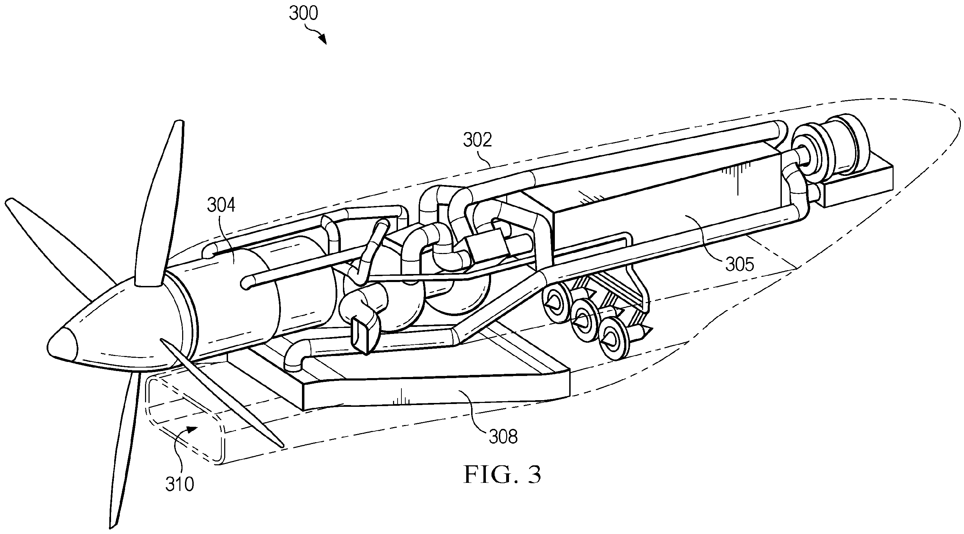

Turning next to **Figure 3****,** an illustration of a nacelle layout is depicted in accordance with an illustrative embodiment. Engine **300** is an example of engines **106** in **Figure 1** and **Figure 2****.** In this example, engine **300** comprises nacelle **302,** electric motor **304,** fuel cell stack **305,** and heat exchanger **308.** In this illustrative example, nacelle **302** is a structure that encloses electric motor **304,** fuel cell stack **305,** and heat exchanger **308.**

In this example, heat exchanger **308** has a rectangular shape and is positioned at a slant relative to opening for inlet **310.** This slant can have an acute angle that is less than 90 degree. This shape and positioning of heat exchanger **308** enables reducing the frontal area of nacelle **302.** A reduction in the size of electric motor **304,** fuel cell stack **305,** and heat exchanger **308** can be achieved as the number of engines are increased.

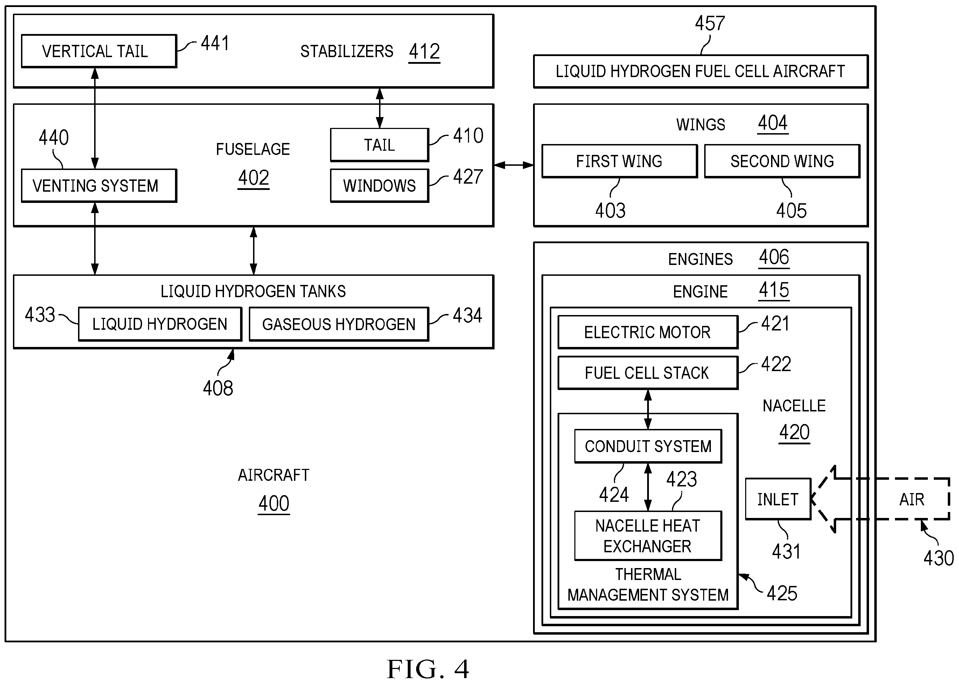

With reference next to **Figure 4****,** an illustration of a block diagram of a liquid hydrogen fuel cell aircraft is depicted in accordance with an illustrative embodiment. In this illustrative example, aircraft **100** and the components for aircraft **100** as depicted in **Figure 1****,** **Figure 2****,** and **Figure 3** are an example of an implementation for aircraft **400.** In this example, aircraft **400** takes the form of liquid hydrogen fuel cell aircraft **457** having distributed systems. Aircraft **400** can be selected from a group comprising an unmanned aircraft, a manned aircraft, a remotely piloted aircraft, a passenger airplane, a cargo airplane, a commercial airplane, an autonomous aircraft, or other types of aircraft. In one example, aircraft **400** can be a passenger aircraft such as a 50 passenger aircraft.

In this example, aircraft **400** has a number of different components. As depicted, aircraft **400** comprises fuselage **402,** wings **404,** engines **406,** stabilizers **412,** and a set of liquid hydrogen tanks **408.** As used herein, a "set of' when used with reference to items means one or more items. For example, a set of liquid hydrogen tanks is one or more liquid hydrogen tanks.

In this illustrative example, wings **404** comprises first wing **403** and second wing **405.** These are connected to fuselage **402.** Engines **406** are connected to first wing **403** and second wing **405.** In one example, engines **406** can be four engines, six engines, ten engines, or some other suitable number of engines.

In this illustrative example, the set of liquid hydrogen tanks **408** are connected to fuselage **402.** Stabilizers **412** are connected to tail **410** of fuselage **402.**

In this example, each engine contains a number of components. For example, engine **415** in engines **406** comprises nacelle **420,** electric motor **421,** fuel cell stack **422,** and nacelle heat exchanger **423.** In this example, electric motor **421,** fuel cell stack **422,** and nacelle heat exchanger **423** are located in nacelle **420.**

Nacelle **420** is an enclosure that houses components for engine **415.** This enclosure can provide aerodynamic properties. Nacelle **420** can also provide structural support for components in engine **415.**

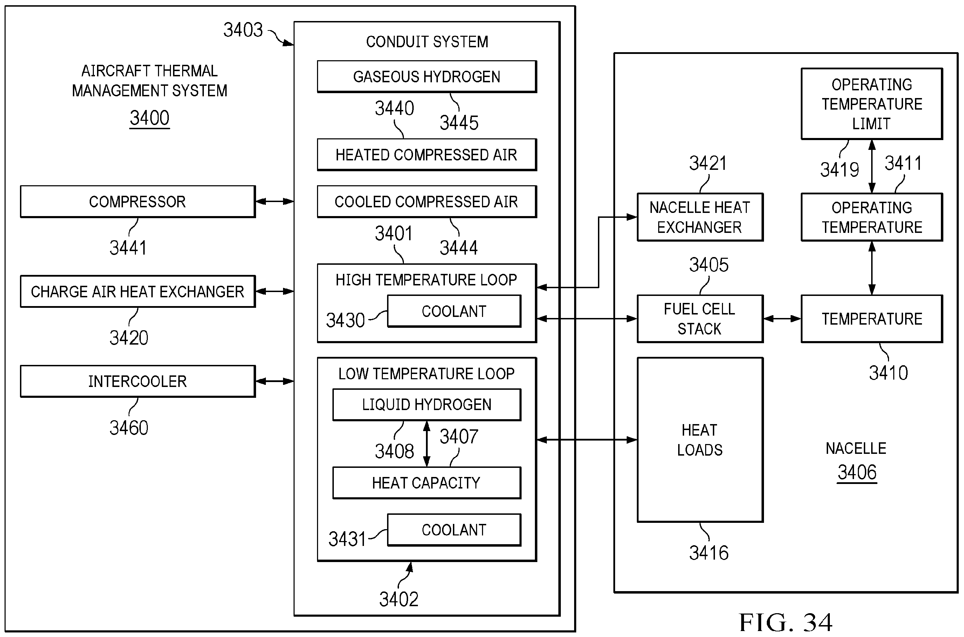

Further in this illustrative example, nacelle heat exchanger receives air **430** flowing through inlet **431** in nacelle **420.** Nacelle heat exchanger **423** provides cooling for fuel cell stack **422** in nacelle **420.** This cooling can be implemented in a high temperature cooling loop such as high temperature loop **3401** in **Figure 34** below.

For example, conduit system **424** is fluidically connected to nacelle heat exchanger **423** and fuel cell stack **422.** Conduit system **424** comprises one or more conduits that carry coolant that can be used to cool fuel cell stack **422.** These conduits can be, for example, pipes, tubes, or other suitable structures. Conduit system **424** can also include valves that can control the flow of coolant within conduits. Further, conduit system **424** can include pumps to move fluids.

In this manner, the flow of coolant can be controlled to flow to or through various components. Further, these valves can be used to control the flow of coolant to form different loops for cooling or heating components.

In this example, nacelle heat exchanger **423** and conduit system **424** form thermal management system **425.** This thermal management system **425** cools fuel cell stack **422.** A HTPEM (High Temperature Proton Exchange Membrane) fuel cell requires coolant at a temperature too high to work as coolant for other engine components. Another low temperature coolant loop is required to cool engine components other than the fuel cell stack **422.** This low temp coolant loop either uses its own ram air radiator or cools the coolant in another heat exchanger or cooling method. This vehicle cools its low temperature coolant as part of its pressure control system for the tanks, which requires the heating and recirculating of hydrogen.

In this illustrative example, the set of liquid hydrogen tanks **408** are located outside of fuselage **402.** These liquid hydrogen tanks store liquid hydrogen **433** that is used in fuel cell stack **422** to generate electricity to power electric motor **421.**

Further, in this example, these liquid hydrogen tanks extend along the outside of fuselage **402** above wings **404.** Further, the set of liquid hydrogen tanks **408** can be located below windows **427** in fuselage **402.** In this example, windows **427** are arranged along a line on either side of fuselage **402.** In this example, the set of liquid hydrogen tanks **408** extend along a number of sides of fuselage **402.** Liquid hydrogen tanks **408** are cryogenic tanks.

In this illustrative example, aircraft **400** also includes venting system **440.** Venting system **440** is connected to the set of liquid hydrogen tanks **408.** Venting system **440** operates to vent gaseous hydrogen **434** from the liquid hydrogen tanks **408.**

In one illustrative example, venting system **440** extends through fuselage **402** to vertical tail **441** in stabilizers **412.** Vertical tail **441** is connected to tail **410** of fuselage **402.** With this example, venting system **440** vents gaseous hydrogen **434** through the vertical tail **441.**

Thus, in these examples, as the number of engines **106** increases, different components can be further distributed through these engines. This distribution can provide for an increase in redundancy. Additionally, the size of the components can be reduced within the engines as a number of engines **406** increase.

Liquid hydrogen tank placement and reducing the size of the package for the thermal management and fuel cell systems are examples of one or more features that result from the different illustrative examples. For example, the distribution of the propulsive power, thermal management, and fuel cell system over a greater number of nacelles can enable electric motors in those nacelles to have a smaller power requirement and for the heat exchangers, and fuel cells to be broken into smaller sizes that are easier to manufacture and integrate into the airplane.

The block diagram illustration of aircraft **400** in **Figure 4** and illustration of aircraft **100** in **Figure 1** and **Figure 2** are examples of an implementation for aircraft not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

In another illustrative example, a different liquid hydrogen tank position can be used rather than on top of the wing and by the sides of the fuselage. Further, in another illustrative example, other numbers of the fuel cell stacks can be used in an engine such as 2, 3 or some other number of fuel cell stacks. Additionally, other features may be implemented to decrease the volume required for the thermal management system or fuel cell stacks to further help with packaging. Features such as a microchannel heat exchanger or a high temperature proton exchange membrane fuel cell in the fuel cell stacks can be used.

As another example, hydrogen can be stored and other forms other than liquid hydrogen. For example, different hydrogen carriers such as liquid or gaseous methane or other hydrocarbon molecules. With this example, these types of hydrocarbon fuels can be processed using reformation to separate the hydrogen for use in the fuel cell stacks. In other words, other types of storage tanks can be used in addition to liquid hydrogen tanks **408** that store other types of hydrocarbon fuel that can be processed to obtain gaseous hydrogen **434** for use in the fuel cell stacks to generate electricity.

### 2. METHOD OF NACELLE HEAT EXCHANGER INTEGRATION FOR A HYDROGEN FUELED FUEL CELL POWERED AIRCRAFT

The illustrative examples recognize and take into account that hydrogen powered aircraft can use fuel cells to drive an electric motor driven propeller. The fuel cells in general produce a significant amount of waste heat. This waste heat is removed from the fuel cells and dissipated into the ambient air during operation of aircraft.

For example, fuel cell stacks that use high temperature proton exchange membrane (HTPEM) fuel cells and low temperature proton exchange membrane (LTPEM) fuel cells both generate significant amounts of heat compared to the power produced. This heat is rejected into ambient air from the engines. The heat rejection is more difficult during phases of flight such as taxi, takeoff and climb. During these phases, the amount of ambient air is not always available in the desired amounts to provide the desired cooling. Further, during these phases of flight, the temperature difference between the ambient air and fuel cell coolant is typically lower than at cruise.

This removal of heat can be also referred to as heat rejection. This heat rejection can cause significant ram drag especially during take-off and climb phases. Significant ram drag can be present when adequate ram air is unavailable and the temperature difference between the ambient air and the fuel cell coolant is also lower.

One solution can involve using large inlet areas and variable exhaust systems. However, increasing the size of the frontal area can lead to issues related to the packaging of the heat exchangers within the nacelle.

Ram drag is the difference in the change in momentum between the exit and the inlet of a system. It can be positive which means produces thrust or negative which is a drag to the aircraft. Due to the large amount of heat to be removed and the lower temperature difference between the coolant and ambient air, the size of current heat exchangers needed are considered to be large.

Typical fuel cells operate with efficiencies in the range of 40 to 60 percent. The general power required based on the aircraft size can be hundreds of kilowatts to thousands of kilowatts. This operation implies the amount of heat rejected by the fuel cells in the fuel cell stacks could be the same order of magnitude as the power produced by the aircraft.

The temperature difference between the coolant and the ambient air can be as low as 20 degrees centigrade in the case of low temperature proton exchange membrane (PEM) fuel cells and as low as 70 degrees centigrade in the case of high temperature PEM fuel cells. This disclosure addresses an issue involving installing the nacelle heat exchangers with minimum drag penalty and options related to getting the ambient cooling air in and out of the heat exchangers as well as potentially other issues.

The illustrative examples provide a fuel cell based electric powered aircraft with hydrogen as a fuel. In these examples, a fuel cell stack is comprised of fuel cells. These fuel cell stacks can be located with the engines of aircraft. In other words, a fuel cell stack to be located in the same nacelle that contains the engine. A fuel cell stack is cooled by various options and the heat from the fuel cell stack has to be rejected to the ambient air using coolant to ambient air heat exchangers also located in the nacelles.

Further, a fan system can be included in each nacelle. The electric fan system can include a number of fans that can change speed depending on the cooling needed. In this example, a fan system increases airflow through the heat exchangers. This increased airflow using a fan system can reduce the size of the heat exchanger within the nacelle.

Also, a fixed area nozzle can enable useful thrust recovery by the ram air. Use of a variable area nozzle can optimize the power required by the fan system and increase the thrust contribution from the overall cooling system at various phases of the flight.

The illustrative examples provide an integration of these heat exchangers into the nacelles instead of within the fuselage.

In one illustrative example, a fuel cell based electric powered aircraft with hydrogen as a fuel is depicted. In these examples, a fuel cell stack is comprised of fuel cells. Fuel cell stacks can be located with the engines of aircraft. In other words, a fuel cell stack can be located in the same nacelle that contains the engine. A fuel cell stack is cooled by various options and the heat from the fuel cell stack has to be rejected to the ambient air using coolant to ambient air heat exchangers.

Further, an electric fan system can be included in each nacelle. The electric fan system can include a number of variable speed fans that can change speed depending on the cooling needed. Also, a fixed area nozzle can enable useful thrust recovery by the ambient ram air. In this example, ambient air is the air surrounding or around the aircraft. Further, in the illustrative examples, increasing the area of the nacelle heat exchanger can reduce ram drag.

Thus, heat exchangers and fan systems can be used within the nacelles for the engines to deliver the desired cooling air flow. The heat exchangers can be positioned within the nacelles to be substantially parallel to aircraft flight direction.

As a result, the illustrative examples can also provide at least one of reduced drag or production of thrust. In these examples, the phrase "at least one of," when used with a list of items, means different combinations of one or more of the listed items can be used, and only one of each item in the list may be needed. In other words, "at least one of' means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of' can be, for example, without limitation, two of item A; one of item B; and ten of item C; four of item B and seven of item C; or other suitable combinations.

Also, a variable area nozzle can be used to reduce the fan power. In this example, a variable area means that the cross sectional area of the nozzle can be adjusted during operation. This area change can change the exhaust velocity. A fixed area means that the cross sectional area of the nozzle remains fixed without changing.

In the different examples, a heat exchanger can have different shapes to reduce the frontal area with respect to the inlet for the nacelle. This frontal area can be substantially perpendicular to the inlet. The heat exchanger can also include a fan system such as an electrically driven axial fan or radial blower to provide a desired level of airflow during the different phases of flight including when the aircraft is on the ground.

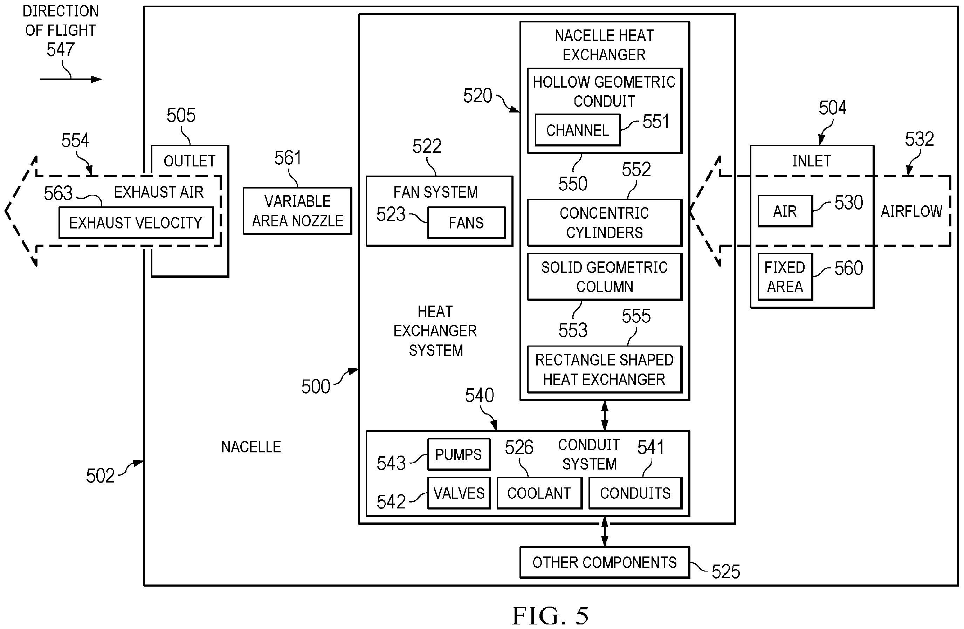

With reference next to **Figure 5****,** an illustration of a block diagram of a heat exchanger system for an aircraft is depicted in accordance with an illustrative embodiment. In this illustrative example, heat exchanger system **500** is located in nacelle **502.** Nacelle **502** is an example of nacelle **420** for engine **415** and aircraft **400** in **Figure 4****.** In this illustrative example, nacelle heat exchanger **520** can be oriented substantially parallel to direction of flight **547** of an aircraft. For example, the length of nacelle heat exchanger **520** is greater than the width or thickness, this longer dimension of nacelle heat exchanger **520** can be oriented substantially parallel to direction of flight **547.** Heat exchanger system **500** can also be referred to as a ram air radiator.

In this illustrative example, nacelle **502** has inlet **504** and outlet **505.** Air **530** flows into nacelle **502** through inlet **504** and out of nacelle **502** through outlet **505.**

In this illustrative example, heat exchanger system **500** comprises nacelle heat exchanger **520.** In some illustrative examples, heat exchanger system **500** can also include fan system **522.**

Nacelle heat exchanger operates to transfer heat away from coolant **526** using air **530** in an airflow **532** to nacelle heat exchanger **520.**

In this illustrative example, airflow **532** to nacelle heat exchanger **520** can take one or more different forms. For example, airflow **532** can move over a surface of nacelle heat exchanger **520,** through nacelle heat exchanger **520,** or some combination thereof. For example, nacelle heat exchanger **520** can have a solid surface over which air **530** flows in airflow **532.** In another example, nacelle heat exchanger **520** can have conduits, channels or openings through which air **530** in airflow **532** travels.

Nacelle heat exchanger **520** can be comprised of a number of different types of materials. For example, nacelle heat exchanger **520** can be comprised of a number of materials selected from at least one of aluminum, copper, a copper alloy, an aluminum alloy, titanium, a titanium alloy, a composite material, or some other suitable material.

Nacelle heat exchanger 520 can take a number of different forms. For example, nacelle heat exchanger **520** can comprise hollow geometric conduit **550** with channel **551.** In this example, airflow **532** passes at least one of though a surface in channel **551** or the surface on an exterior of hollow geometric conduit **550.** Hollow geometric conduit **550,** can be, for example, a cylinder, a rectangular prism, an ellipsoidal, or some other suitable form.

In another illustrative example, nacelle heat exchanger **520** can be comprised of concentric cylinders **552** positioned in nacelle **502.** In still another illustrative example, nacelle heat exchanger **520** can comprise solid geometric column **553** positioned within nacelle **502.** With this example, airflow **532** passes over an exterior of solid geometric column **553** positioned within the nacelle, wherein the airflow passes over an exterior of the solid geometric column **553.**

In yet another example, nacelle heat exchanger **520** can comprise rectangle shaped heat exchanger **555** positioned at an angle to the airflow **532.** This rectangle shaped heat exchanger can have a shape of a rectangular prism or cuboid.

When used in heat exchanger system **500,** fan system **522** operates to increase airflow **532** to the nacelle heat exchanger **520.** This increased airflow can reduce the size of nacelle heat exchanger **520** while still providing a desired level of cooling.

In this illustrative example, fan system **522** is a hardware system and comprises a number of fans **523.** The number of fans **523** can be located at least one of in front of nacelle heat exchanger **520** or behind nacelle heat exchanger **520.** As another example, fans **523** and fan system **522** can be arranged in a ring within nacelle **502.**

In this example, the front of nacelle heat exchanger **520** is closer to inlet **504** than outlet **505.** Fans **523** can be selected from at least one of an axial fan, an annular fan, a radial blower, a rim-driven fan, or some other suitable type of fan.

Coolant **526** can be used within conduit system **540** to cool various components within nacelle **502.** For example, coolant **526** can be located in conduit system **540.** Conduit system **540** comprises conduits **541,** which are pipes or tubes through which fluids can travel. Further, conduit system **540** can also include valves **542** to control the flow of fluids through conduit system **540.** In this example, conduit system **540** can include pumps **543** to move fluids.

Conduit system **540** is a hardware system comprised of one or more conduits. These conduits can be a pipe, a tube, or other structure through which coolant **526** can flow between nacelle heat exchanger **520** and other components **525** in nacelle **502.** Conduit system **540** is thermally connected to nacelle heat exchanger **520** and other components **525** in nacelle **502.** In these illustrative examples, thermally connected means that heat transfer can occur between two components.

For example, a conduit in conduit system **540** can be in contact with or close proximity to the heat load. In other illustrative examples, conduit can be connected to the heat load such that coolant **526** can flow through the heat load from conduit system **540.**

In this example, conduit system **540** can use coolant **526** to cool at least one of a fuel cell stack, a motor, or an electronic system in other components **525.** Further in these illustrative examples, one or more of other components **525** can located in different positions relative to nacelle heat exchanger **520.** For example, when nacelle heat exchanger **520** takes the form of hollow geometric conduit **550,** components such as a fuel cell stack can be located within channel **551** in hollow geometric conduit **550.**

In one illustrative example, inlet **504** can have fixed area **560.** With this example, variable area nozzle **561** can be positioned between fan system **522** and outlet **505.** The variable area means that the area in a cross-section of variable area nozzle **561** can change. Airflow **532** through variable area nozzle **561** can result in exhaust velocity **563** of exhaust air **554** exiting outlet **505** that is greater than a free stream velocity.

The block diagram illustration of heat exchanger system **500** in **Figure 5** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, nacelle heat exchanger **520** can add other shapes such as a prism, or other suitable shape. Also, one or more nacelle heat exchangers can be used in addition to or in place of nacelle heat exchanger **520** in heat exchanger system **500.** This heat exchanger system may also be referred to as a ram air radiator.

In another illustrative example, nacelle heat exchangers can be used in a dedicated nacelle that provides cooling. In yet another illustrative example, a tip-driven fan can be used in the fan system. In yet other illustrative examples, the heat exchangers with an air inlet and fan system can be located in other locations in aircraft such as the fuselage in addition to or in place of in the nacelles for the engines. Further, heat exchanger can have flow steering features such as guide vanes to ensure the airflow enters and exits the heat exchanger in a desired orientation.

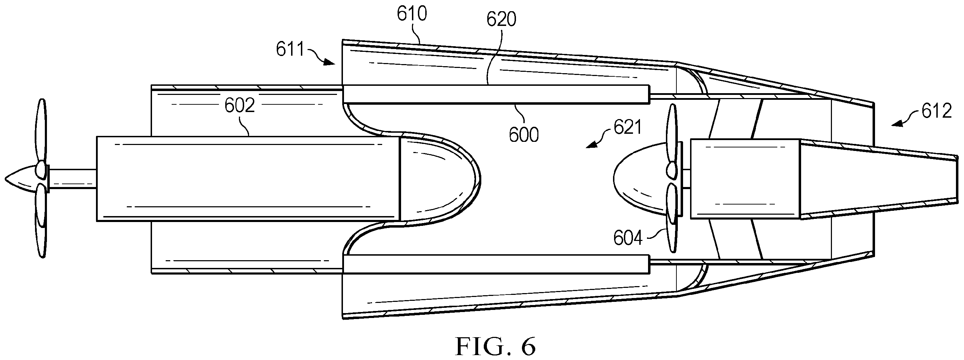

With reference now to **Figures 6-18****,** illustrations of nacelle heat exchanger configurations are depicted in accordance with an illustrative embodiment. In this example, different layouts are shown in cross-section as examples of configurations that can be used when implementing heat exchangers in the nacelle of the engines.

Turning to **Figure 6****,** the cross-sectional view of a portion of a nacelle with a nacelle heat exchanger is depicted in accordance with an illustrative embodiment. In this illustrative example, nacelle heat exchanger **600** is located in nacelle **610,** which has inlet **611** and outlet **612.** As depicted, nacelle heat exchanger **600** is a hollow geometric conduit in the form of the cylinder **620** having a channel **621.** This hollow geometric can also take the form of an ellipsoid cylinder, annular cone, polygonal prism, or other shape.

As depicted, components **602** are located at least at one of forward of or partially within channel **621** in nacelle heat exchanger (HEX) **600.** These components can be, for example, a fuel cell power system, a fuel cell stack, an electric motor, a controller, shaft, propeller, or other components for the engine of aircraft.

As depicted, fan **604** is located aft of nacelle heat exchanger **600.** In other examples, fan **604** can be located forward of nacelle heat exchanger **600.**

Fan **604** operates to increase the airflow passing through nacelle heat exchanger **600.** This type of airflow may be useful when aircraft is operating on the ground or at altitudes and speeds that do not provide the desired levels of airflow or heat rejection required to cool the fuel cell.

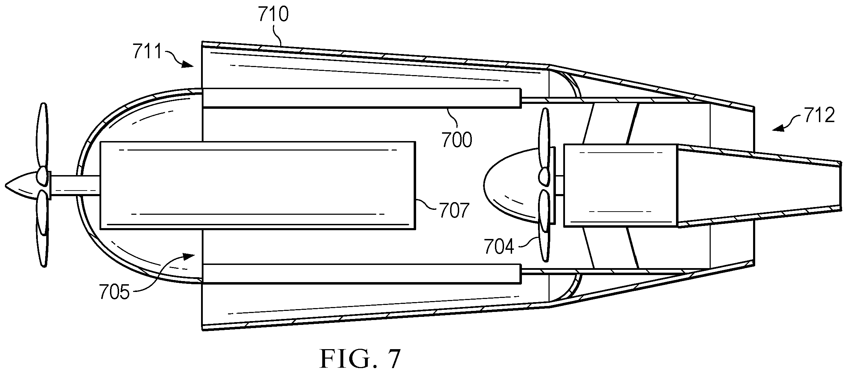

Turning next to **Figure 7****,** another illustration of a cross-sectional view of a portion of a nacelle with a nacelle heat exchanger is depicted in accordance with an illustrative embodiment. In this example, nacelle heat exchanger (HEX) **700** is located in nacelle **710,** which has inlet **711** and outlet **712.** In this example, nacelle heat exchanger (HEX) **700** is annular with channel **705.**

As depicted, fan **704** is located aft of nacelle heat exchanger **700.** In other examples, fan **704** can be located forward of nacelle heat exchanger **700.** In this example, other components **707** are illustrated as being further within the channel **705** of nacelle heat exchanger **700** as compared to other components **602** in **Figure 6****.**

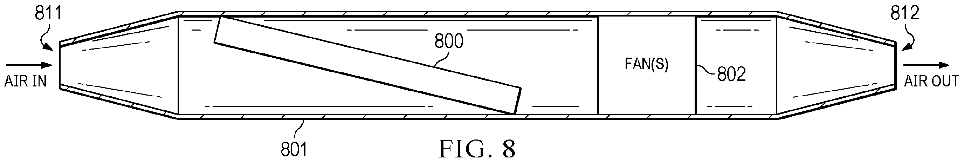

With reference to **Figure 8****,** another illustration of a cross-sectional view of a nacelle with the nacelle heat exchanger is depicted in accordance with an illustrative embodiment. In this example, heat exchanger **800** is located in nacelle **801,** which has inlet **811** and outlet **812.**

As depicted, nacelle heat exchanger **800** has a rectangular shape and is positioned at a shallow angle within nacelle **801** with fan **802** being located aft of heat exchanger **800.** This angle is considered to be a shallow angle. In this example, a shallow angle is an angle that is 45° or less.

The position of nacelle heat exchanger **800** at the shallow angle reduces the exposed frontal nacelle area and reduces the degree of airflow turning as it passes through nacelle heat exchanger **800** to maintain a low pressure drop across the heat exchanger.

In this example, fan **802** is shown as being positioned aft of heat exchanger **800.** In other examples, fan **802** can be located forward of nacelle heat exchanger **800.**

The diagrams of layouts for heat exchangers shown in **Figures 6-8** are not meant to limit the manner in which heat exchanger designs in nacelles are implemented. For example, one or more fans can be used in addition to the fans depicted in these examples.

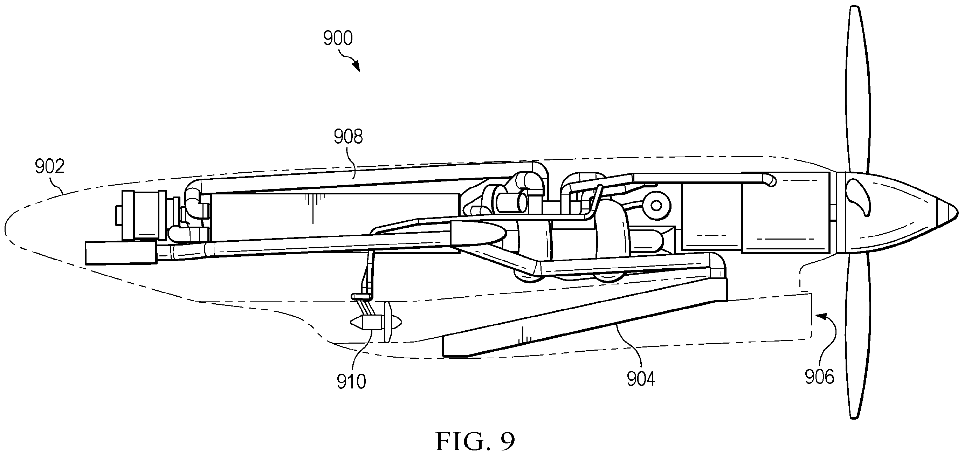

With reference to **Figure 9****,** a pictorial illustration of an engine with a nacelle heat exchanger is depicted in accordance with an illustrative embodiment. As depicted in the example, a side view of engine **900** is shown within nacelle **902** being shown in an exposed view and partially in phantom.

In this view, nacelle heat exchanger **904** can be seen at a shallow angle with respect to inlet **906** in nacelle **902.** In this illustrative example, the shallow angle and being angle that is up to 45 degrees. Also depicted is conduit system **908** connected to heat exchanger **904.** Conduit system **908** can circulate a fluid such as a gas or liquid for cooling in response to air flowing through inlet **906** in nacelle **902** through nacelle heat exchanger **904.** The air flowing through inlet **906** to nacelle heat exchanger **904** can reduce the temperature of the coolant flowing within conduit system **908.**

In this example, fan system **910** is located aft of nacelle heat exchanger **904.** Fan system **910** can be used to cause or increase airflow through inlet **906** and through nacelle heat exchanger **904.** Fan system **910** can be used to generate or increase airflow to nacelle heat exchanger **904** when the aircraft is stationary or moving at slower speeds.

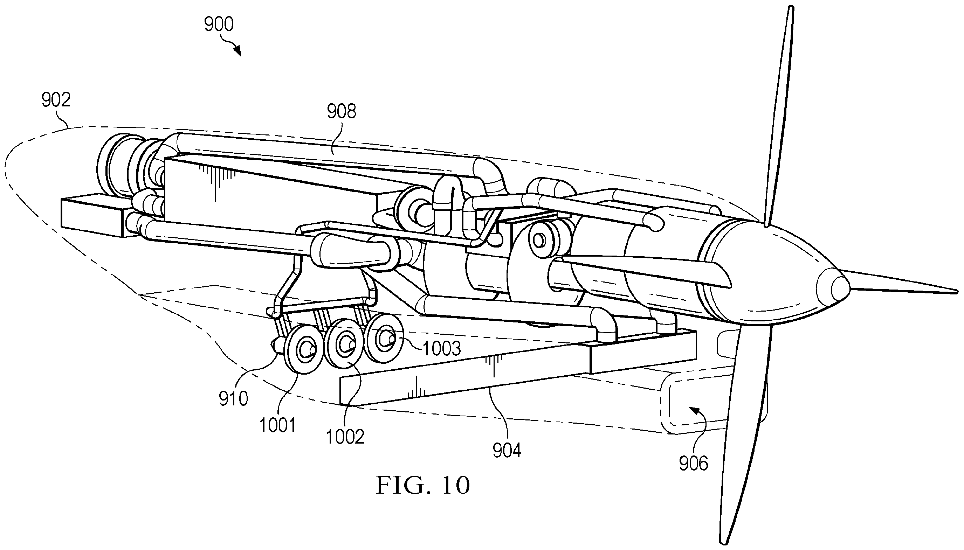

With reference to **Figure 10****,** a pictorial illustration of an engine with a nacelle heat exchanger is depicted in accordance with an illustrative embodiment. In this example, engine **900** in **Figure 9** is shown in perspective view.

As shown in this view, fan system **910** comprises fan **1001,** fan **1002,** and fan **1003.** In some illustrative examples, fan system **910** can be located forward or in front of nacelle heat exchanger **904.** In other illustrative examples, other numbers of fans can be present in fan system **910.** For example, fan system **910** can have one fan, five fans, or some other number of fans.

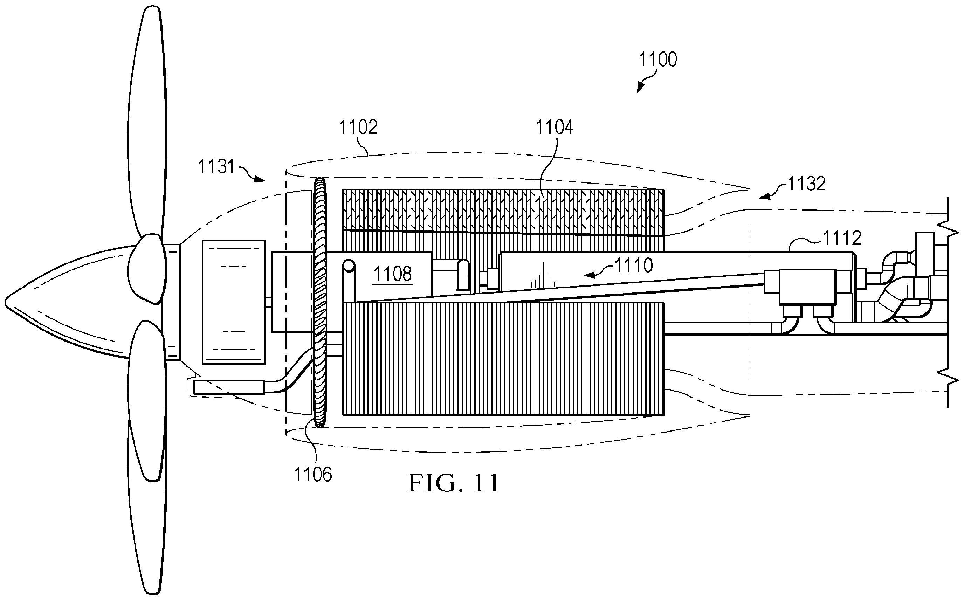

Turning to **Figure 11****,** a pictorial illustration of an engine with a nacelle heat exchanger is depicted in accordance with an illustrative embodiment. In this illustrative example, engine **1100** is shown from a side view. Engine **1100** comprises nacelle **1102** that houses components for engine **1100.** Nacelle **1102** has inlet **1131** and outlet **1132.**

A portion of nacelle **1102** is shown in phantom while another portion of nacelle **1102** is shown in cross-section such that other components within engine **1100** are shown.

As depicted, nacelle heat exchanger **1104** is located within nacelle **1102.** In this illustrative example, nacelle heat exchanger **1104** is annular cylindrical in shape and has channel **1110.**

Nacelle heat exchanger **1104** is positioned within nacelle **1102** such that the components can be positioned within channel **1110** in nacelle heat exchanger **1104.** Further in this view, fan **1106** is located forward of nacelle heat exchanger **1104.** In this depicted example, fan **1106** is an annular fan.

Also, in this example, electric motor **1108** is located within channel **1110** of nacelle heat exchanger **1104,** which can be seen in this exposed view of nacelle heat exchanger **1104.** Further, a portion of fuel cell stack **1112** can also be seen as being located within channel **1110** of nacelle heat exchanger **1104.**

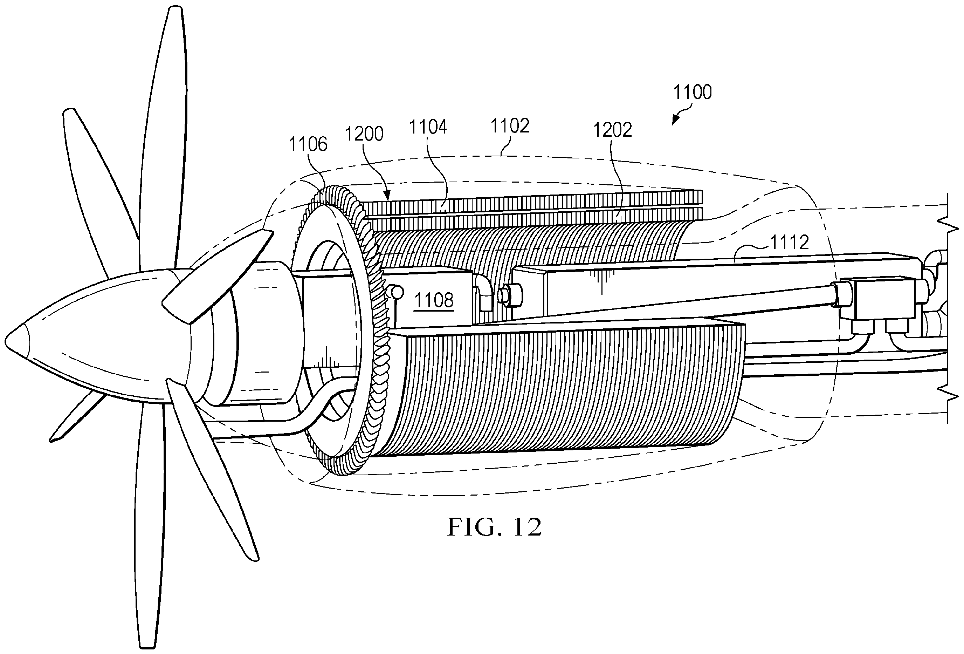

In **Figure 12****,** another pictorial illustration of an engine with a nacelle heat exchanger is depicted in accordance with an illustrative embodiment. In this figure, a perspective view of engine **1100** is shown. Cross-sectional view of heat exchanger **1104** is shown in this figure. Nacelle heat exchanger **1104** is shown as two concentric cylinders **1200.** In this example, cylinder **1202** is located within cylinder **1204.**

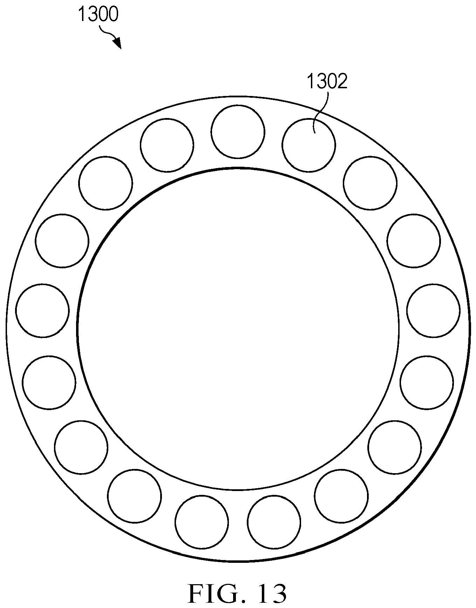

Next in **Figure 13****,** a schematic illustration of a fan configuration for use with a nacelle heat exchanger within a nacelle is depicted in accordance with an illustrative embodiment. As depicted, fans **1300** are arranged in a 360-degree ring **1302.** This arrangement of fans can be used in place of the annular fan in **Figure 11** and in **Figure 12****.**

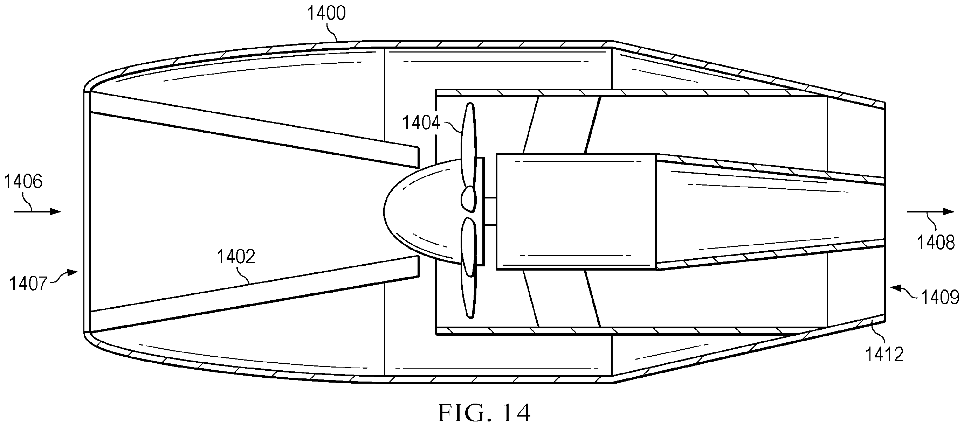

With reference now to **Figure 14****,** a cross-sectional view of a nacelle with the nacelle heat exchanger is depicted in accordance with an illustrative embodiment. In this example, a cross-sectional view is depicted of nacelle **1400** with inlet **1407** and outlet **1409.** Example, nacelle **1400** is a dedicated nacelle for nacelle heat exchanger **1402.**

Nacelle heat exchanger **1402** is also shown in a cross-sectional view within nacelle **1400.** In this example, nacelle heat exchanger **1402** has a conical annular shape. In other words, nacelle heat exchanger **1402** can be a hollow geometric conduit with a channel. With this example, airflow by air **1406** passes at least one of though a surface in the channel or the surface on an exterior of the hollow geometric conduit. In one illustrative example, nacelle heat exchanger **1402** can also be in the shape of a pyramidal frustum.

Further in this example, fan **1404** is shown as being located aft of nacelle heat exchanger **1402.** In the different examples, aft means fan **1404** is located behind nacelle heat exchanger **1402** with respect to the flow of air **1406** into inlet **1407** and the flow of air **1406** as exhaust **1408** through outlet **1409.**

Further in this example, outlet **1409** takes the form of nozzle **1412.** The nozzle can be a fixed area nozzle or a variable area nozzle depending on the particular implementation. This nozzle can increase exhaust velocities by air **1406** exiting nacelle **1400** as exhaust **1408.** This higher exhaust velocity is achieved relative to the free stream velocity of the aircraft, leading to thrust recovery by this system.

In some illustrative examples, a fan system with one or more fans can be located forward or in front of the heat exchanger. A conduit system, fuel cell stack, and other components for the electric engine can also be seen in these views.

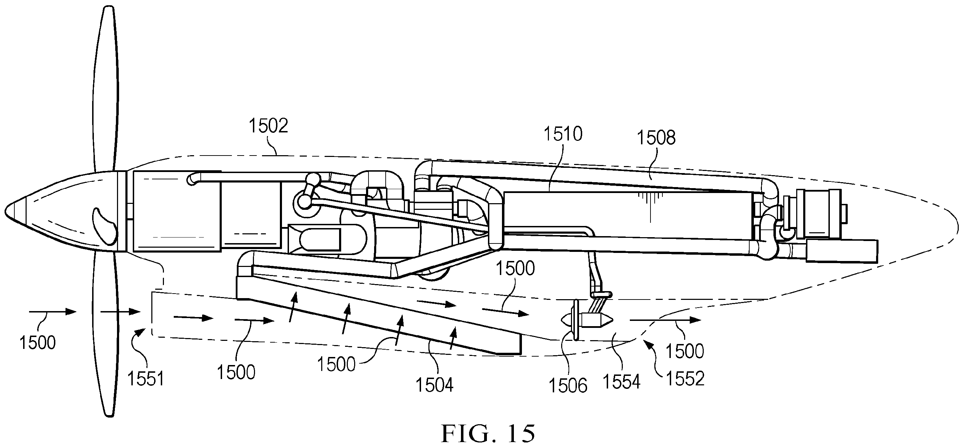

Turning now to **Figure 15****,** an illustration of airflow through a nacelle to provide cooling for a fuel cell stack is depicted in accordance with an illustrative embodiment. As depicted, arrows **1500** illustrate airflow into the substantially rectangular inlet at the bottom of the nacelle **1502.** In this example, this airflow enters nacelle **1502** through inlet **1551,** passes through the front of nacelle heat exchanger **1504** and exits out the back of nacelle heat exchanger **1504.** The air then passes through fans **1506** before exiting out of the nozzle **1554** in outlet **1552** of nacelle **1502.**

As depicted, fans **1506** can increase airflow shown by arrows **1500** during different phases of flight to provide desired airflow for cooling. For example, increased airflow can be achieved while the aircraft is stationary or taxiing prior to takeoff. In this example, conduit system **1508** is present and is connected to the forward end of heat exchanger **1504** and provides cooling for fuel cell stack **1510.** Conduit system **1508** can provide for a flow of coolant through nacelle heat exchanger **1504,** wherein the coolant is cooled by airflow through heat exchanger **1504.**

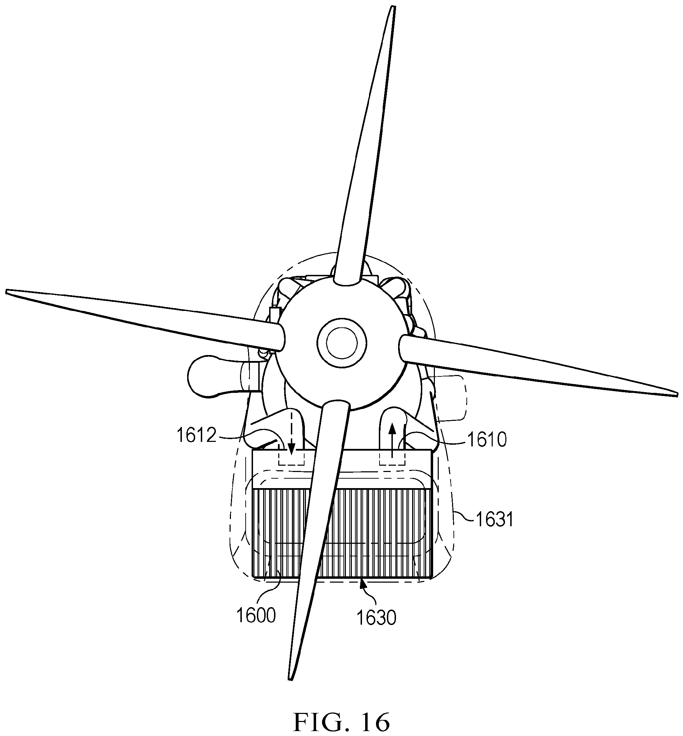

Turning to **Figure 16****,** an illustration of a front view of the nacelle with a nacelle heat exchanger is depicted in accordance with an illustrative embodiment. As depicted, nacelle heat exchanger **1600** is seen in inlet **1630** of nacelle **1631.** In this example, coolant enters through coolant inlet **1612** and exits through coolant exit **1610.** This coolant can be cooled by heat exchanger **1600.** The coolant can be cooled by airflow entering inlet **1630** of nacelle **1631** and passing through nacelle heat exchanger **1600.**

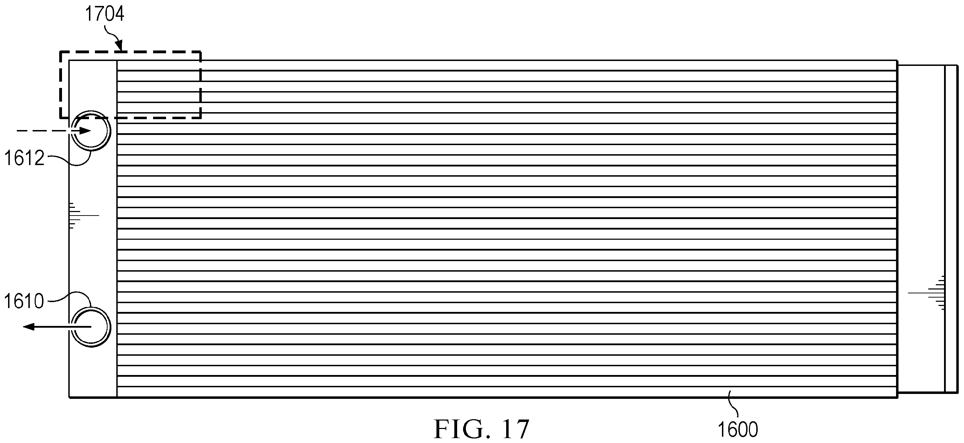

Next in **Figure 17****,** an illustration of a nacelle heat exchanger is depicted in accordance with an illustrative embodiment. In this example, a top view of heat exchanger **1600** is shown. nacelle heat exchanger **1600** is a rectangular heat exchanger. As depicted, coolant enters nacelle heat exchanger **1600** through coolant inlet **1612** flows though heat exchanger **1600** and exits through coolant exit **1610.**

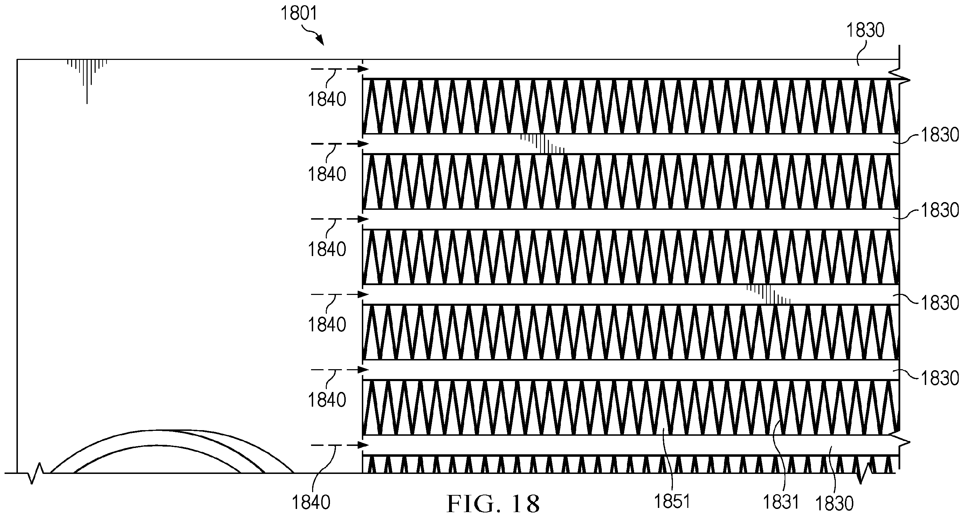

Next in **Figure 18****,** an illustration of airflow through a nacelle heat exchanger is depicted in accordance with an illustrative embodiment. In this figure, arrows **1840** show the flow of coolant in an enlarged view of section **1704** of nacelle heat exchanger **1600.** In this enlarged view, the coolant flows through multiple rows of tubes **1830** stacked on top of each other that form panels **1814** for heat exchanger **1600.** The coolant is cooled by airflow traveling through fins **1831** in heat exchanger **1600.**

The different illustrations of heat exchanger systems implemented in nacelles in **Figures 6-18** are presented as some implementations for heat exchanger system **500** in **Figure 5****.** These illustrations are not meant to limit the manner in which other heat exchanger systems can be implemented in other illustrative examples. Other heat exchanger shapes and locations of components can be present in other illustrative examples. In another example, two heat exchangers can be implemented in one illustrative example.

In these examples, a single inlet and a single outlet are shown for a nacelle. In other examples, the nacelle can have more than one inlet and more than one outlet. For example, one inlet and outlet can be present in the nacelle for the main airflow to the fuel cell. Another inlet and another outlet and be present for the cooling airflow to a heat exchanger that cools other components such as electric motors and motor controllers. In these examples a unique installation can be used in which a dedicated nacelle is present for the nacelle heat exchanger such as in **Figure 14****.** In this example, only one inlet and outlet for the cooling air flow.

### 3. START-UP OF HIGH TEMPERATURE PROTON EXCHANGE MEMBRANE (HTPEM) FUEL CELL AIRCRAFT WITH MULTIPLE POWER GENERATING UNITS

High temperature proton exchange membrane (HTPEM) fuel cells, with their higher operating temperature, offer a substantial improvement in thermal driving potential compared to conventional low temperature proton exchange membrane (LTPEM) technology, allowing significant downsizing of fuel cell aircraft thermal management systems (TMSs). However, in having a much higher minimum operation temperature of around 120°C, the start-up process can be a time and energy intensive process when using high temperature proton exchange membrane (HTPEM) fuel cells in a fuel cell stack. In these examples, the startup process is a process in which the fuel cell stack is brought up to a minimum operating temperature and then fed fuel and oxidant to cause the fuel cell stack to begin generating power on its own.

The illustrative examples recognize and take into account that it is desirable to reduce the amount of time and electrical energy required to start HTPEM fuel cell stacks. This time element can be critical, as start-up time is allocated as down time in the conceptual operations (CONOPS) of fuel cell aircraft. The down time is an unwanted expense to operating aircraft for airlines.

An energy element is needed before the fuel cell stacks are started because power is not available from these fuel cell stacks before an operating temperature. Therefore, energy spent for start-up comes from another source.

Batteries are one solution for this start-up energy. However, batteries have an undesired weight. Further, batteries also have a low gravimetric energy density (Wh/kg). Thus, minimizing the start-up energy from batteries is useful in reducing aircraft weight and improving the performance in operating these type of aircraft.

The illustrative embodiments recognize and take into account that no existing solutions are present for aerospace applications. An alternate solution may be used in ground applications of HTPEM fuel cells. This solution can involve heating the stack via electrical resistive "blankets" or "mats" surrounding the stack edge or resistive heaters embedded in the stack end plate.

This solution relies on heat reaching the fuel cell stack internal active area through the exterior of the stack. This type of heating uses a more thermally resistive heat flow path, resulting in much wasted heat to the surroundings and slower time to bring the fuel cell stack internals up to the operating temperature. This situation can be especially present with fuel cell stack geometries with a large cross-sectional area, and can generate uneven temperature gradients within the stack.

Another alternate approach can push heated air through the fuel cell stack using an air management system (AMS) for the fuel cell stack. This approach wastes heat by rejecting the heated air through the fuel cell stack outlet and suffers from poorer effective thermal conductivity between the heating fluid (air) and the stack medium as compared to coolant.

Another solution may employ heating the fuel cell stack via cooling fluid as described in the different illustrative examples. This approach can operate to heat all of the fuel cell stacks at once but uses significantly more energy.

For example, in the case of an aircraft configuration with 6 engines located in six nacelles , three fuel cell power units are present per wing. With this configuration, the energy usage can be three times the total energy as compared to only starting one fuel cell stack size per wing before utilizing their generated power to start the other fuel cell stacks.

Thus, the illustrative examples provide a method, apparatus, and system to minimize the total energy and time required to complete the start-up of multiple HTPEM fuel cell stacks contained on a fuel cell powered aircraft. In one illustrative example, coolant heaters and the existing thermal management systems are used to start HTPEM fuel cell stacks by heating and circulating the fuel cell stack coolant. In this example, the coolant is first used to heat a subset of the total number of fuel cell stacks on the aircraft. After these fuel cell stacks reach operating temperature and start generating power, this power can be used to start the remaining fuel cell power stacks.

This feature involves a unique configuration of the coolant heating architecture in the illustrative examples. One illustrative example uses an electric coolant heater. This heater can be integrated into the conduits for the coolant system such that the existing cooling pump would be utilized to circulate the coolant through the stack and the start-up heater. Some bypasses would also be included in the architecture to allow the coolant to skip past the heater in normal operation after start-up, and a bypass to allow the coolant to skip past the heat exchanger during startup to avoid needing to heat the heat exchanger in addition to the stack-minimizing start-up time and energy required.

Another feature in the illustrative examples implements a startup process that produces the amount of energy needed to start fuel cell stacks. In a configuration with multiple fuel cell stacks on the aircraft, a subset of the total number of fuel cell stacks can be started initially using the on-board battery sized for only starting that subset of fuel cell stacks.

Once the subset of fuel cell stacks is started, the power generated by that subset of fuel cell power units now running can be used to start the remaining fuel cell stacks. Additionally, when the fuel cell stacks reach a minimum operating temperature required for electrochemical activity, fuel and air can be supplied to the fuel cell stacks along with applying a modest power draw to the fuel cell stack operating that generates sufficient heat to heat itself even faster.

Thus, the illustrative example can implement direct heating of the coolant in using a subset of the fuel cell stacks started by this type of heating to heat the other fuel cell stacks. This type of feature is enabled through the use of a coolant heater and configuration of conduits to supply heated coolant to fuel cell stacks.

Electrical cross ties can be used to allow the initial warmed and operating fuel cell power units to power coolant heaters and the air management systems (AMSs) of the other, not yet started fuel cell stacks to start those fuel cell stacks . This type of starting of fuel cell stacks can be performed for any aircraft system with multiple fuel cell stacks.

In another example, combustion-based coolant heaters that utilize the fuel, hydrogen or otherwise, can be used to heat the coolant and bring the fuel cell stacks up to temperature.

Further, a ground power hook-up can be implemented in some examples. This ground power hookup can be utilized to start all the stacks in unison when an aircraft is on the ground near an available ground power hookup.

This feature enables sizing the battery on-board to only start the initial subset of fuel cell power units, keeping the system lightweight but allowing for an even faster startup when ground power hookup is available, and the operator is not required to rely on the energy contained within the batteries.

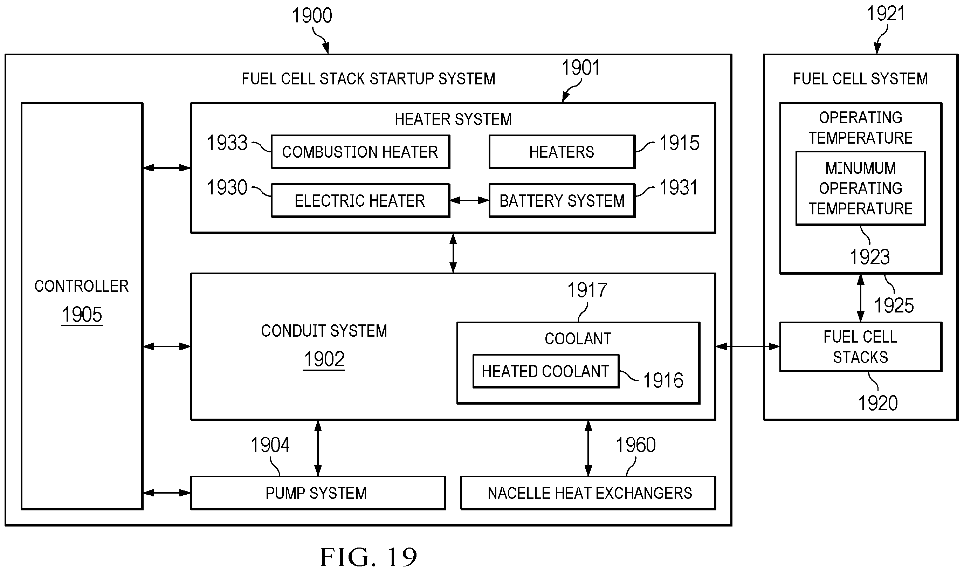

With reference next to **Figure 19****,** an illustration of a block diagram of a startup system for an aircraft is depicted in accordance with an illustrative embodiment. In this illustrative example, fuel cell stack startup system **1900** can be used in aircraft **400** in **Figure 4** to startup operation for fuel cell stacks in engines **406** in **Figure 4****.**

In this illustrative example, fuel cell stack startup system **1900** is configured to start operation of fuel cell stacks **1920.** Each fuel cell stack in fuel cell stacks **1920** can be located in a nacelle for an engine. In this example, fuel cell stacks **1920** are high-temperature proton exchange membrane (HTPEM) fuel cell stacks.

Fuel cell stack startup system **1900** is configured to assist or cause fuel cell stacks **1920** to reach operating temperature **1925.** Operating temperature **1925** is one or more temperatures for fuel cell stacks **1920** to generate electricity. This electricity can be used to power at least one of the motors or other components in the engines or elsewhere in the aircraft. This operating temperature is the temperature needed to sustain a reaction in a fuel cell stack to generate electricity from hydrogen gas and oxygen.

For example, fuel cell stack startup system **1900** circulates heated coolant **1916** to a subset of fuel cell stacks **1920** in fuel cell system **1921** such that the subset of fuel cell stacks **1920** reach operating temperature **1925** and generate power that heats coolant **1917** to start up other fuel cell stacks in fuel cell stacks **1920** in the fuel cell system **1921.** In this example, the power is electrical power.

In this illustrative example, fuel cell stack startup system **1900** is comprised of a number of different components. As depicted in this example, fuel cell stack startup system **1900** comprises heater system **1901,** conduit system **1902,** pump system **1904,** and controller **1905.**

In this example, heater system **1901** operates to heat coolant **1917.** Heater system **1901** can comprise a number of heaters **1915.** In one example, a heater in the number of heaters **1915** and a fuel cell stack in fuel cell stacks **1920** can be present in each nacelle.

Heater system **1901** can comprise electric heater **1930** connected to battery system **1931.** In another example, heater system **1901** comprises combustion heater **1933** that generates heat to heated coolant **1916** using a hydrogen gas. With this example, combustion heater **1933** can be a conduit or radiator that is thermally connected to a component combusting hydrogen fuel. The hydrogen fuel can be delivered to the burner component as a gas.

Conduit system **1902** is thermally connected to heater system **1901** and fuel cell stacks **1920.** Pump system **1904** is configured to circulate the heated coolant **1916** through conduit system **1902** to fuel cell stacks **1920.**

In this illustrative example, controller **1905** is a hardware system that can include software. When software is used, the operations performed by controller **1905** can be implemented in program instructions configured to run on hardware, such as a processor unit. When firmware is used, the operations performed by controller **1905** can be implemented in program instructions and data and stored in persistent memory to run on a processor unit. When hardware is employed, the hardware can include circuits that operate to perform the operations in controller **1905.**

In the illustrative examples, the hardware for controller **1905** can take a form selected from at least one of a circuit system, an integrated circuit, an application-specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices. Additionally, the processes can be implemented in organic components integrated with inorganic components and can be comprised entirely of organic components excluding a human being. For example, the processes can be implemented as circuits in organic semiconductors. Controller **1905** can also be selected from at least one of a single core processor, a dual-core processor, a multiprocessor core, a general-purpose central processing unit (CPU), a graphics processing unit (GPU), a digital signal processor (DSP), or some other type of processor unit.

In this illustrative example, controller **1905** can control heater system **1901** to heat coolant **1917** to form heated coolant **1916.** Controller **1905** can control pump system **1904** to circulate heated coolant **1916** through conduit system **1902.** Further, controller **1905** can control conduit system **1902** to circulate heated coolant **1917** to a subset of fuel cell stacks **1920.** In this example, heated coolant **1916** causes the subset of fuel cell stacks **1920** to reach operating temperature **1925.** In this example, operating temperature **1925** is minimum operating temperature **1923** that is needed for the subset of fuel cell stacks **1920** to start generating electricity.

In this illustrative example, controller **1905** can control conduit system **1902** to circulate heated coolant **1916** to all of fuel cell stacks **1920** in response to the subset of fuel cell stacks **1920** reaching operating temperature **1925.** In this example, heated coolant **1916** is heated by the subset of fuel cell stacks **1920** generating power. The remaining fuel cell stacks reach the operating temperature **1925** from heated coolant **1916** being heated by the subset of fuel cell stacks **1920.** In this example, heated coolant **1916** is heated by the subset of fuel cell stacks **1920.** Heater system **1901** no longer needs to heat coolant **1917.**

In one example, heater system **1901** is comprised of heaters **1915** and in this example each fuel cell stack in fuel cell stacks **1920** and each heater in heaters **1915** is located in a nacelle. Further in this example, each fuel cell stack is thermally connected to a heater in the heaters **1915** by conduit system **1902.** With this example, controller **1905** sends power generated by the subset of the fuel cell stacks **1920** to heaters **1915** for other fuel cell stacks that are not generating the power.

Further in this example, controller **1905** controls conduit system **1902** to bypass heater system **1901** after startup of fuel cell stacks **1920.** The heating of coolant **1917** by heater system **1901** is no longer needed with fuel cell stacks **1920** now operating at operating temperature **1925.** For example, controller **1905** halts heating of coolant **1917** by heaters **1915** in heater system **1901** for the subset of fuel cell stacks **1920** generating power in response to the subset of fuel cell stacks **1920** generating power.

During this start up process, controller **1905** controls conduit system **1902** to bypass nacelle heat exchangers **1960** during startup of the fuel cell stacks. Bypass of nacelle heat exchangers **1960** avoids cooling heated coolant **1916** by nacelle heat exchangers **1960.** In this example, a nacelle heat exchanger in nacelle heat exchangers **1960** and a fuel cell stack in fuel cell stacks **1920** is present in each nacelle.

In one illustrative example, controller **1905** controls the conduit system **1902** to circulate the heated coolant to a number of the fuel cell stacks, wherein the heated coolant causes the number of fuel cell stacks to reach an operating temperature **1925** to a number of fuel cell stacks **1920,** wherein the heated coolant causes the number of fuel cell stacks **1920** to reach operating temperature **1925.** In this example, the number of fuel cell stacks **1920** is selected from a group comprising all of fuel cell stacks **1920** and a subset of fuel cell stacks **1920.** In other words, the circulation of heated coolant can be to all or a portion of fuel cell stacks **1920.**

Further in this example, conduit system **1902** and pump system **1904** operate to circulate coolant **1917** to nacelle heat exchangers **1960** during operation of electric engines for the aircraft.

The block diagram illustration of fuel cell stack startup system **1900** in **Figure 19** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, although not shown, conduit system 1902 includes conduits. Conduit system **1902** can also include valves, pumps, or some combination thereof.

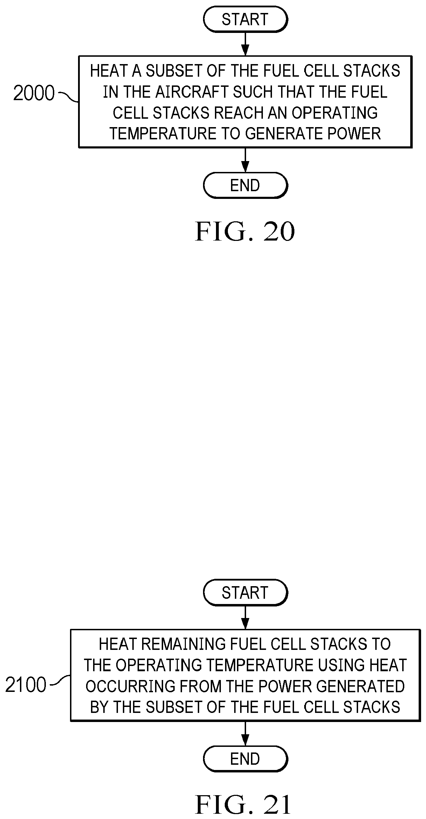

Turning next to **Figure 20****,** an illustration of a flowchart of a process for managing starting and operation of fuel cell stacks for aircraft is depicted in accordance with an illustrative embodiment. The process in **Figure 20** can be implemented in hardware, software, or both. For example, the process can be implemented in fuel cell stack startup system **1900** in **Figure 19****.**

The process heats a subset of the fuel cell stacks in the aircraft such that the fuel cell stacks reach an operating temperature to generate power (operation **2000**). The process terminates thereafter.

With reference next to **Figure 21****,** an illustration of a flowchart of a process for heating fuel cell stacks is depicted in accordance with an illustrative embodiment. The process in this flowchart is an example of an additional operation that performs the operations in **Figure 20****.**

The process heats remaining fuel cell stacks to the operating temperature using heat occurring from the power generated by the subset of the fuel cell stacks (operation **2100**). The process terminates thereafter.

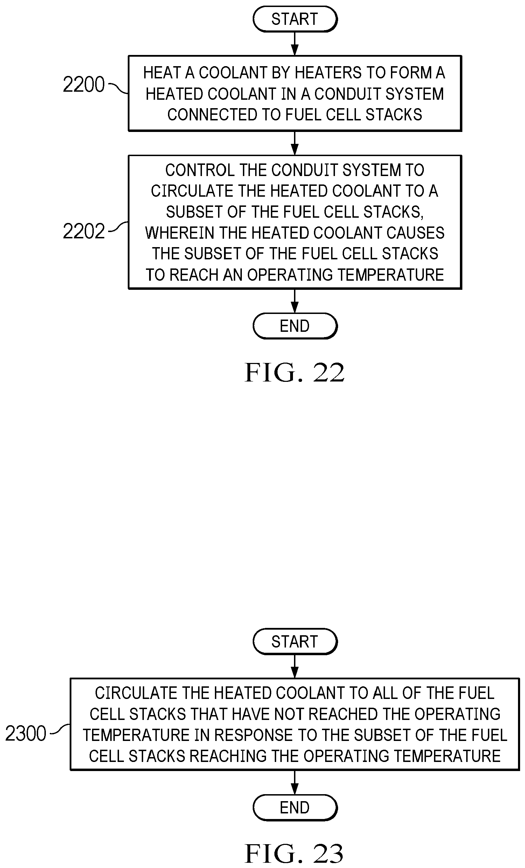

Turning next to **Figure 22****,** an illustration of a flowchart of a process for managing starting and operation of fuel cell stacks for aircraft is depicted in accordance with an illustrative embodiment. The process in **Figure 22** can be implemented in hardware, software, or both. When implemented in software, the process can take the form of program instructions that are run by one of more processor units located in one or more hardware devices in one or more computer systems. For example, the process can be implemented in fuel cell stack startup system **1900** in **Figure 19****.**

The process begins by heating a coolant by heaters to form a heated coolant in a conduit system connected to fuel cell stacks (operation **2200**). In operation **2200,** heaters can be selected from at least one of electric heater connected to a battery system or a combustion heater that generates heat to heat the coolant using a hydrogen gas.

The process controls the conduit system to circulate the heated coolant to a subset of the fuel cell stacks, wherein the heated coolant causes the subset of the fuel cell stacks to reach an operating temperature (operation **2202**). The process terminates thereafter.

With reference now to **Figure 23****,** an illustration of a flowchart of a process for circulating heated coolant is depicted in accordance with an illustrative. This process is an example of an additional operation that can be performed with the operations in **Figure 22****.**

The process circulates the heated coolant to all of the fuel cell stacks that have not reached the operating temperature in response to the subset of the fuel cell stacks reaching the operating temperature (operation **2300**). The process terminates thereafter.

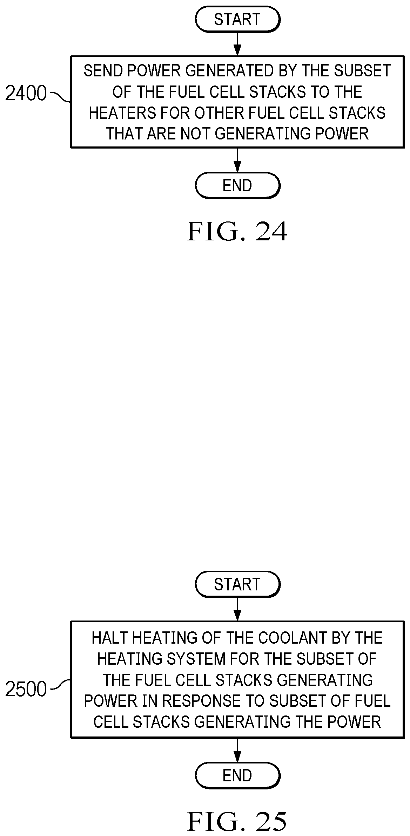

Next in **Figure 24****,** an illustration of a flowchart of a process for sending power to fuel cell stacks is depicted in accordance with an illustrative embodiment. The operation in this flowchart is an example of an additional operation that performs the operations in **Figure 24****.** In this example, each fuel cell stack in the fuel cell stacks and each heater in the heaters is located in a nacelle. Also, each fuel cell stack is thermally connected to a heater. This thermal connection can be formed using the conduit system.

The process sends power generated by the subset of the fuel cell stacks to the heaters for other fuel cell stacks that are not generating power (operation **2400).** The process terminates thereafter.

Turning now to **Figure 25****,** an illustration of a flowchart of a process for halting heating of coolant is depicted in accordance with an illustrative embodiment. The process in this flowchart is an example of an additional operation that can be performed with the operations in **Figure 22****.**

The process halts heating of the coolant by the heating system for the subset of the fuel cell stacks generating power in response to the subset of fuel cell stacks generating the power (operation **2500**). The process terminates thereafter.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

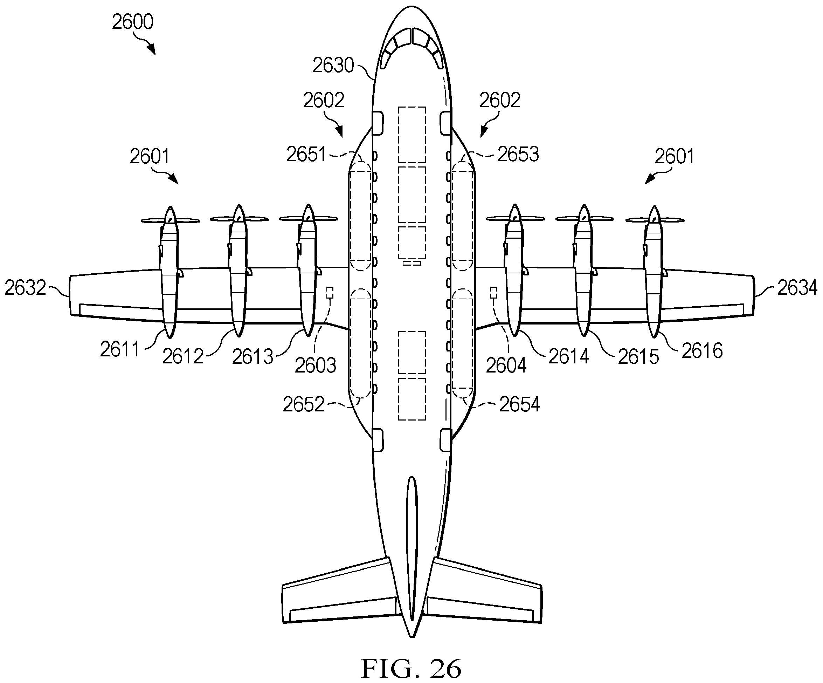

With reference to **Figure 26****,** an illustration of an aircraft with a propulsion and power system is depicted in accordance with an illustrative embodiment. Fuel cell stack startup system **1900** in **Figure 19** can be implemented in aircraft **2600.**

In this illustrative example, aircraft **2600** is an airplane that comprises a fuselage **2630,** first wing **2632** and second wing **2634** and a propulsion and power system in the form of engines **2601** and liquid hydrogen tanks **2602.** These engines are electric engines.

As depicted, liquid hydrogen tanks **2602** comprises liquid hydrogen tank **2651,** liquid hydrogen tank **2652,** liquid hydrogen tank **2653,** and liquid hydrogen tank **2654.** In this illustrative example, two liquid hydrogen tanks are located over the wings on either side of aircraft **2600.**

As depicted in this figure, engines **2601** comprise engine **2611,** engine **2612,** and engine **2613** connected to first wing **2632.** Engines **2601** also comprise engine **2614,** engine **2615,** and engine **2616** connected to second wing **2634.** These engines are all electric engines in this example.

In this example, each of these engines comprises a nacelle that contains a fuel cell stack, an air management system, a thermal management system, a motor, and a controller.

As depicted, two starter batteries are present. Starter battery **2603** is connected to engine **2613** and starter battery **2604** is connected to engine **2614.** Starter battery **2603** can be used to start a fuel cell stack in engine **2613.** Starter battery **2604** can be used at start a fuel cell stack in engine **2614.** In this example, one starter battery is located on each side of aircraft **2600.**

In this illustrative example, two starter batteries are depicted. In other illustrative examples, other numbers of starter batteries can be used. For example, an additional starter battery can be connected to engine **2612.** In yet another illustrative example, a starter battery can be connected to engine **2616.** In yet another illustrative example, a starter battery can be connected to more than one engine.

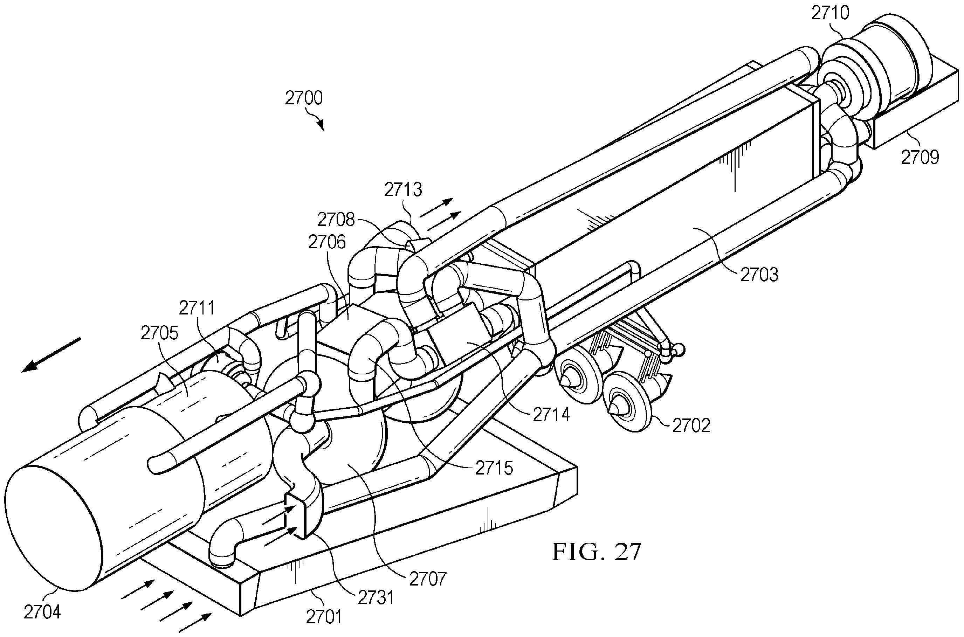

Next in **Figure 27****,** an illustration of an integrated power and propulsion unit is depicted in accordance with an illustrative embodiment. An exposed view of engine **2700** without a nacelle is depicted. In this illustrative example, engine **2700** is an integrated power and propulsion unit (IPPU) and is an example of an engine in engines **2601** shown in **Figure 26** without a nacelle.

Engine **2700** is an example of an engine that can implement a fuel cell startup system. Engine **2700** is comprised of a number of different components.

In this illustrative example, heat exchanger **2701** is a rectangular heat exchanger and operates to remove heat from fuel cell stack coolant and reject that heat to ambient air. Fan system **2702** operates to increase the airflow through heat exchanger **2701.** This fan system can be used when the speed and temperature of ambient air moving through the inlet of the nacelle is insufficient to reject heat from the coolant for cooling different components in engine **2700.**

Fuel cell stack **2703** converts hydrogen and oxygen reactants to electricity. In this example, the hydrogen is gaseous hydrogen and the oxygen is oxygen in the air. Heat and water also results from the generation of electricity using hydrogen and oxygen reactants.

Motor **2704** and controller **2705** convert electricity generated by fuel cell stack **2703** into rotational mechanical energy. This rotational mechanical energy is used to rotate a propeller. Controller **2705** controls the operation motor **2704.**

Compressor **2706** compresses ambient air to provide sufficient oxygen reactant to the fuel cell stack cathode manifold. This compressor also operates to maintain cathode pressure for increased fuel cell stack performance. Turbine **2707** recovers energy from the air exiting fuel cell stack **2703** from the fuel cell stack cathode outlet.

Hydrogen (H2) recirculation blower **2708** operates to recirculate excess, unreacted hydrogen fuel flowing out of fuel cell stack **2703** from the fuel cell anode outlet back into fuel cell stack **2703** through fuel cell anode inlet. In this example, the heater is a starter heater that heats fuel cell stack **2703** to bring fuel cell stack **2703** up to an operating temperature. This operating temperature is the temperature needed to sustain the reaction to generate electricity from hydrogen gas and oxygen.

In this example, high temperature coolant pump **2710** circulates coolant to remove heat from fuel cell stack **2703** and transfer the heat to heat exchanger **2701** for rejection into the air. Low temperature coolant pump **2711** circulates coolant to remove heat from the low temperature components. These low temperature components need lower level cooling as compared to fuel cell stack **2703.** The low temperature components can be, for example, motor **2704** and controller **2705.** The heat is transferred to a low temperature heat exchanger, which is not shown as it is located within the wing, closer to the LH2 tanks.

Also depicted is an air management system (AMS) intake **2731.** This intake receives air for the air management system that conditions air for the fuel cell stack **2703.** This air management system includes compressor **2706** and charge air heat exchanger **2714.**

Further in this example, exhaust **2713** is a location for exhausting vitiated, humid air from the fuel cell stack cathode outlet of fuel cell stack **2703** to the ambient air. Charge air heat exchanger **2714** thermally conditions the air compressor outlet air before it enters the fuel cell stack. Charge air heat exchanger **2714** is a charge air that provides heat exchange for compressed air in these examples. This conditioning can include increasing or reducing the temperature of the air such that fuel cell stack **2703** is at an operating temperature. Fuel cell air feeder duct **2715** routes compressed air from the outlet of compressor **2706** to the fuel cell stack cathode inlet for fuel cell stack **2703.** Heater **2709** can heat the coolant in the high temperature loop as part of a startup process to heat fuel cell stack **2703** at operating temperature.

The pictorial illustration of aircraft **2600** in **Figure 26** and engine **2700** in **Figure 27** are provided as an illustration of an aircraft in an engine in which a startup system can be implemented. This illustrative is not meant to limit the manner in which other illustrative examples can be implemented. For example, aircraft can have four engines or some other number of engines other than the six engines depicted for aircraft 2600. In another illustrative example, one starter battery or three starter batteries can be used in place of the two shown for aircraft 2600. Other illustrative examples can omit fan system **2702.** In other illustrative examples, fan system **2702** can be located in front of heat exchanger **2701.** In still other illustrative examples, heater **2709** can be emitted from engine **2700.**

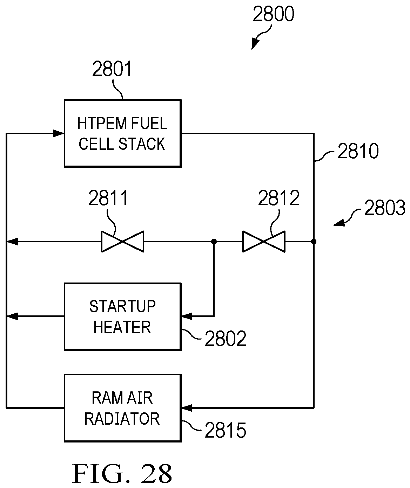

With reference next to **Figure 28****,** an illustration of a schematic diagram of a fuel cell stack startup system is depicted in accordance with an illustrative embodiment. In this illustrative example, fuel cell stack startup system **2800** is an example of a simplified implementation for fuel cell stack startup system **1900** in **Figure 19****.**

As depicted, fuel cell stack startup system **2800** comprises startup heater **2802,** and conduit system **2803.** These two components are used to start the operation of high temperature proton exchange membrane (HTPEM) fuel cell stack **2801.** HTPEM fuel cell stack **2801** is an example of a fuel cell stack in fuel cell stacks **1920** In **Figure 19****,** startup heater **2802** is an example of a heater in heaters **1915** in heater system **1901** In **Figure 19****,** and conduit system **2803** is an example of conduit system **1902** in **Figure 19****.** As depicted, conduit system **2803** comprises conduits **2810,** valve **2811,** and valve **2812.** In another illustrative example, these two valves can be replaced with a three-way valve.

In starting up, HTPEM fuel cell stack **2801** is warmed up to an operating temperature. As depicted, valve **2811** is in a closed position and valve **2812** is in an open position. This positioning of these valves causes air to flow through the startup heater **2802** instead of ram air radiator **2815.**

The air is heated by startup heater **2802** and routed to HTPEM fuel cell stack **2801** as part of a process for heating up HTPEM fuel cell stack **2801** to operating temperature. When HTPEM fuel cell stack **2801** is at an operational temperature, valve **2811** is moved to an open position and valve **2812** is moved to a closed position such that coolant now flows through ram air radiator **2815** instead of startup heater **2802.** Ram air radiator **2815** now operates to provide cooling to maintain HTPEM fuel cell stack **2801** at the operating temperature.

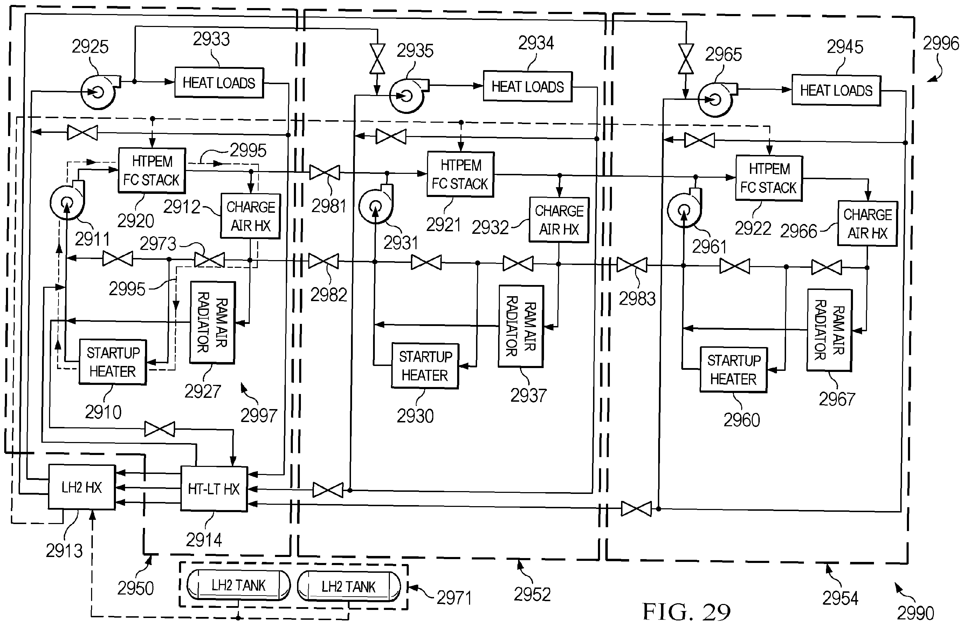

Turning next to **Figure 29****,** an illustration of a schematic diagram of a fuel cell stack startup system in a thermal management system is depicted in accordance with an illustrative embodiment. Fuel cell stack startup system **2997** in thermal management system **2996** is an example of an implementation for fuel cell stack startup system **1900** in **Figure 19****.** Fuel cell stack startup system **2997** depicts components that can be implemented in a single wing with three nacelles. For example, this wing can be first wing **2632** of aircraft **2600** in **Figure 26****.** In this example, components are shown for nacelle **2950,** nacelle **2952,** and nacelle **2954.** Each of the nacelles can include components as shown in fuel cell stack startup system **2800** in **Figure 28****.**

In this illustrative example, the flow of fluids between components in these nacelles is facilitated using conduit system **2990.** Conduit system **2990** comprises conduits such as tubes and pipes. The flow through these conduits can be controlled by valves to generate different flows through conduit system to heat loads **2933.** Further, the conduit system can include pumps to move fluids. Conduit system **2990** is connected to different components. These connections can be thermal connections in which fluids are not exchanged components. In other examples, these connections can include introducing or receiving a fluid from a component.

As depicted, HTPEM fuel cell stack **2920** is located in nacelle **2950.** Other components in this nacelle include startup heater **2910,** pump **2911,** charge air heat exchanger (HX) **2912,** and high temperature and low temperature loop heat exchanger (HT -LT HX) **2914,** and ram air radiator **2927.** In this example, liquid Hydrogen heat exchanger (LH2 LX) **2913** is located in closer to the LH2 tanks **2971** such as in a wing. In some examples, this component can be present in each of the three nacelles or in just one of nacelles. This nacelle also includes heat loads **2933.** These heat loads can include controllers, tanks, electric motors, and other components that generate heat. Pump **2925** is used to move coolant to these heat loads.

In this depicted example, HTPEM fuel cell stack **2921** is located in nacelle **2952.** Other components in this nacelle include startup heater **2930,** pump **2931,** charge air heat exchanger (HX) **2932,** and ram air radiator **2937.** This nacelle also includes heat loads **2934.** Pump **2935** is used to move coolant to these heat loads.

HTPEM fuel cell stack **2922** is located in nacelle **2954.** Other components in this nacelle include startup heater **2960,** pump **2961,** charge air heat exchanger (HX) **2966,** and ram air radiator **2967.** This nacelle also includes heat loads **2945.** Pump **2965** is used to move coolant to these heat loads.

In this configuration, the high temperature (HT) cooling loops in each nacelle are isolated from the other nacelles. Isolation between cooling loops can be performed by closing valve **2981,** valve **2982,** and valve **2983.**

In this example, a startup process is performed for HTPEM fuel cell (FC) stack **2920,** HTPEM fuel cell (FC) stack **2921,** and HTPEM fuel cell (FC) stack **2922.** The startup process involves starting up a subset of these HTPEM fuel cell stacks. In this example, the subset of the HTPEM fuel cell stacks is HTPEM fuel cell stack **2920** in nacelle **2950.**

Starting the operation of the HTPEM FC stack **2920** in this configuration can be performed as follows:
1. Electrically power the startup heater **2910** and coolant pump **2911** using a starter battery. The starter battery can be battery **2603** in **Figure 26****.**
2. Open the bypass valve **2973** to have coolant to bypass ram air radiator **2927,** ensuring that ram air radiator **2927** is not heated. At this point in time, that is used to heat coolant for bringing the fuel cell stacks up to an operating temperature. As a result, rejecting heat is not needed.

As depicted, flow path **2995** is a loop that enables startup heater **2910** to heat the coolant to form heated coolant that is used to heat HTPEM fuel cell stack **2920.** As depicted in this flow path, the coolant flows from charge air HX **2912** to startup heater **2910,** which heats the coolant. Heated coolant flows to HTPEM FC stack **2920** and then back to charge air HX **2912.** In this example, pump **2911** operates to move the coolant in this flow path.

In this example, the flow of the heated coolant is through a subset of the fuel cell stacks, which is HTPEM FC stack **2920.** Further, in this example, the flow is to HTPEM fuel cell stack **2920** and not the other fuel cell stacks, HTPEM fuel cell stack **2921** and HTPEM fuel cell stack **2922.**

3. Once HTPEM FC stack **2920** reaches a minimum operating temperature for electrochemical activity, air (via powering the air management system) and fuel can be supplied to the stack so that HTPEM FC stack **2920** can begin generating power on its own. Additionally, applying a power draw on the HTPEM FC stack **2920** at this point will help it to heat itself due to the operational inefficiency at this initial operating temperature.

At this point, the electrical power generated by HTPEM FC stack **2920** can be used to power the neighboring nacelle's startup heaters to begin warming those HTPEM fuel cell stacks. Once these HTPEM fuel cell stacks reach an operating temperature, air (via the single started stack powering their air management systems) and fuel may be supplied to the remaining fuel cell stacks so that they too can begin producing power on their own.

For example, the high temperature (HT) coolant loops in each nacelle can be connected to each other to form a single loop. This connection can be performed in response to HTPEM FC stack **2920** reaching operating temperature. In other words, the coolant from this fuel cell stack can be used to heat other fuel cell stacks. This kind of heating can be performed in addition to or in place of using the startup heaters in other nacelles. This connection can be performed by placing valve **2981,** valve **2982,** and valve **2983** in an open position.

As a result, the heated coolant from HTPEM FC stack **2920** can be exchanged with the coolant in the other HT coolant loops for the other nacelles to begin heating those fuel cell stacks. Thus, heat generated by a fuel cell stack that has reached operational temperature can be used to heat other fuel cell stacks in other nacelles to initiate operation of those fuel cell stacks. Further, this type of heating can also enable the illuminating use of startup heaters in the other nacelles. As a result, a number of heaters can be reduced, reducing the weight of the aircraft.

In another illustrative example, this type of heating can be performed in conjunction with the electrical heating approach using starter triggers. As a result, the use of startup heaters and exchanging coolant with other nacelles can increase the speed at which fuel cell stacks reach an operating temperature and begin generating electricity.

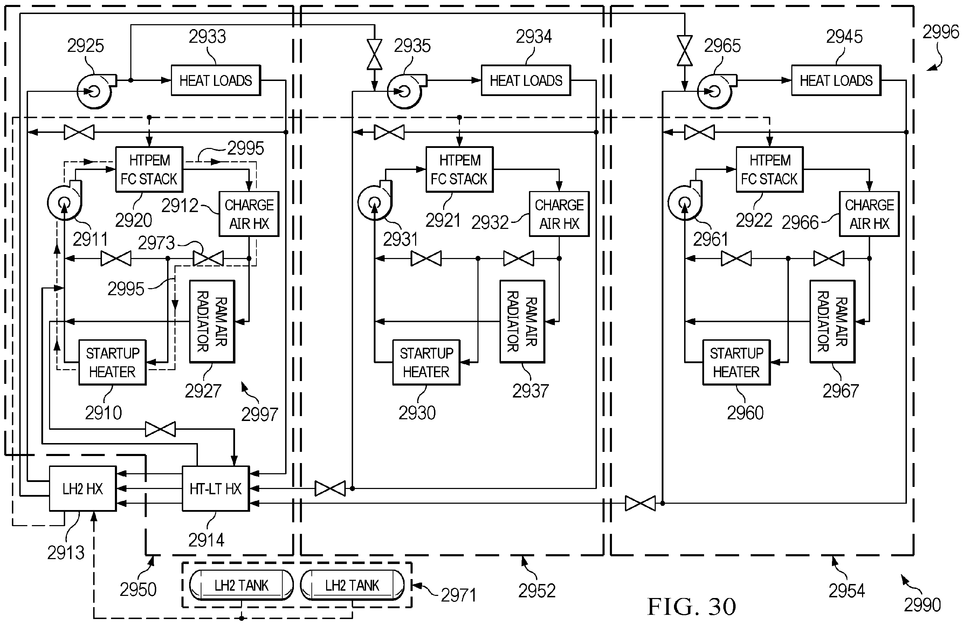

Turning next to **Figure 30****,** an illustration of a schematic diagram of a fuel cell stack startup system in a thermal management system with is depicted in accordance with an illustrative embodiment. **Figure 30** depicts configuration of fuel cell stack startup system **2997** in which the high temperature cooling loops are isolated from each other by the configuration of conduit system **2990.** Conduits are not present that enable exchanging high temperature coolant between fuel cell stacks in different nacelles.

In this example, the startup of HTPEM fuel cell (FC) stack **2921** and HTPEM fuel cell (FC) stack **2922** is initiated by power sent to startup heater **2930** and **2960** from HTPEM fuel cell (FC) stack **2920** in response to startup heater **2910** generating heat such that HTPEM fuel cell (FC) stack **2920** reaches an operating temperature. In this example, coolant is not exchanged between the different nacelles for use in starting up the different HTPEM fuel cell stacks.

The illustration of fuel cell stack startup system **2997 in** **Figure 29** and **Figure 30** is presented as an illustration of implementation for fuel cell stack startup system **1900 in** **Figure 19****.** This illustration is not meant to limit the manner in which other fuel cell stack systems can be implemented in other examples. For example, single startup heater can be used in other fuel cell stack startup systems. In another illustrative example, a battery can be included in a nacelle.

### 4. LOW TEMPERATURE PROTON EXCHANGE MEMBRANE CHARGE AIR HEAT EXCHANGER

Low temperature proton exchange membrane (LTPEM) fuel cells present a zero-emission, high-efficiency manner of generating at least one of propulsive power or systems power for aircraft. When using oxygen as one of the two reactants, LTPEM fuel cell systems often utilize compressors to maintain a sufficient supply of reactant and increase performance via increased cathode-side pressure. In this example the other reactant is gaseous hydrogen (H2).

This compression, however, can heat the inlet air beyond the operating temperature of the fuel cell stack. To avoid overheating in this situation, a cooling stage can be used.

In the illustrative example, cooling loads and efficiency are factors in cooling designing systems. It is desirable to reduce the overall cooling load and increase efficiency of the cooling system.

Existing low temperature proton exchange membrane (LTPEM) fuel cell systems require compressors to sufficiently pressurize ambient air and supply the fuel cell stack with one of the two reactants, which is oxygen, usually from air. In compressing the air, heat is also added. Depending on the degree of the compression, cooling the air before the air enters the fuel cell stack can be performed to avoid overheating and drying out the fuel cell stack membranes.

This cooling can be performed using an air-to-liquid intercooler. However, this type of cooling puts the burden of cooling the air on the stack cooling system. Additionally, energy recovery opportunities are not taken advantage of with current systems.

The illustrative examples provide a method, apparatus, and system for cooling incoming compressed air, while allowing the capture of significant energy to increase overall system efficiency.

In one illustrative example, a charge air heat exchanger is used. The component utilizes cooled outgoing stack air to cool the hot, compressed compressor outlet air. The effect of this type of cooling is two-fold. This component cools the compressed air to enable reducing the air-to liquid intercooler as compared to not performing this type of cooling. Additionally, the use of the charge air heat exchanger enables heating the stack exhaust air to increase the energy recovery of the air management system (AMS) expander to increase overall system efficiency.

The cooling of the compressor outlet air is currently performed using a charge air intercooler. In ground vehicle fuel cell systems, the heat injected into the air during compression is less because of the relatively low-pressure ratio between stack and ambient pressure. As a result, less energy recovery is available by expansion for the same reason.

A charge air heat exchanger is a heat exchanger that provides heat exchange for compressed air. This heat exchanger can cool compressed air. A charge air intercooler is an intercooler that provides cooling for compressed air in these examples.

The illustrative examples recognize and take into account that the systems used in ground vehicles often either have no inlet air cooling or simply use a single air-to-liquid intercooler. Likewise, the current systems in vehicles often do not include an expander for energy recovery.

The illustrative examples recognize and take into account that current cooling in ground vehicle systems do not take into account the manner in which aircraft operates at vastly different altitudes as compared to ground goals. With aircraft, which operate at different altitudes, the need to cool the compressed air and to have energy available for recovery at the stack outlet are increased. The illustrative examples use a heat exchanger in addition to the intercooler to reduce the cooling load and increase energy recovery by the expander. In some illustrative examples, the charge air heat exchanger can replace charge air intercooler, rather than simply downsizing the charge air intercooler.

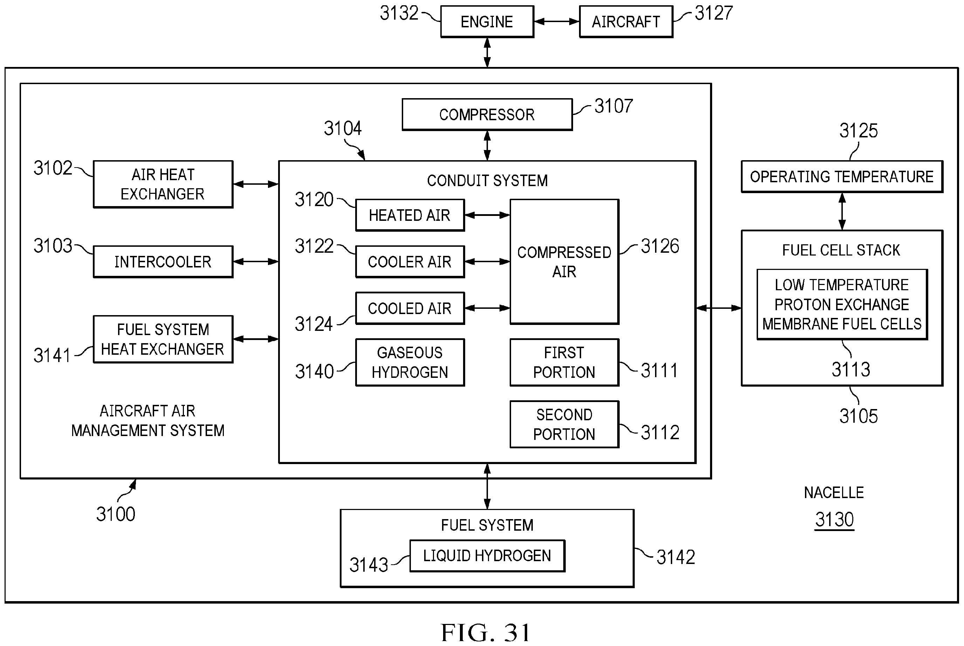

With reference next to **Figure 31****,** an illustration of a block diagram of an aircraft management system is depicted in accordance with an illustrative embodiment. In this illustrative example, aircraft air management system **3100** can be implemented in aircraft **400** in **Figure 4** to manage the operation of fuel cell stacks in engines **406** in **Figure 4** to generate electricity to operate engines **406.** In this example, aircraft air management system **3100** manages the temperature of air sent to fuel cell stack **3105** for use with gaseous hydrogen to generate electricity for operating electric motors in the aircraft. In this example, fuel cell stack **3105** comprises low temperature proton exchange membrane fuel cells **3113.**

In one illustrative example, aircraft air management system **3100** has a number of different components. As depicted, aircraft air management system **3100** comprises air heat exchanger **3102,** intercooler **3103,** and conduit system **3104.**

In this example, conduit system **3104** is connected to air heat exchanger **3102,** intercooler **3103** and fuel cell stack **3105.** Heated air **3120** flows through conduit system **3104** to air heat exchanger **3102.** Air heat exchanger **3102** cools heated air **3120** to form cooler air **3122.** In this example, cooler air **3122** flows from the air heat exchanger **3102** through the conduit system to intercooler **3103.** Intercooler **3103** further cools cooler air **3122** to form cooled air **3124.** Cooled air **3124** flows from intercooler **3103** through conduit system **3104** to fuel cell stack **3105.** In this example, cooled air **3124** is at operating temperature **3125** for fuel cell stack **3105.**

In one illustrative example, air heat exchanger **3102,** intercooler **3103,** conduit system **3104,** and fuel cell stack **3105** are located in nacelle **3130** for engine **3132** for aircraft **3127.**

Further, aircraft air management system **3100** also includes compressor **3107.** Compressor **3107** is connected to conduit system **3104** and generates heated air **3120** that flows through air heat exchanger **3102.**

In this example, heated air **3120,** cooler air **3122,** and cooled air **3124** are compressed air **3126.**

Further, conduit system **3104** can also route gaseous hydrogen **3140** from fuel system **3142** to fuel cell stack **3105.** Gaseous hydrogen **3140** can be used with cooled air **3124** to generate electricity to power engine **3132** for aircraft **3127.** This routing is performed using separate conduits such that gaseous hydrogen **3140** is separate from air flowing in conduit system **3104.** In other words, a first portion **3111** of conduit system **3104** can be used to route air while second portion **3112** of conduit system **3104** can be used to route gaseous hydrogen **3140.** These two portions are separate from each other such that air and hydrogen do not mix within conduit system **3104.**

In this example, second portion **3112** of conduit system **3104** routes heated air **3120** from intercooler **3103** to fuel system heat exchanger **3141** that heats liquid hydrogen **3143** to form gaseous hydrogen **3140.** This second portion of conduit system **3104** routes gaseous hydrogen **3140** from the fuel system heat exchanger **3141** to fuel cell stack **3105.** Fuel cell stack **3105** uses oxygen in cooled air **3124** and gaseous hydrogen **3140** to generate electricity. In this example, the air is cool to operating temperature **3125.**

The block diagram illustration of aircraft air management system **3100** in **Figure 31** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, a nacelle may have more than one fuel cell stack in other illustrative examples. As another example, conduits are present in conduit system **3104.** Additionally, valves and pumps also may be present in conduit system **3104.** Although not shown in this block diagram, aircraft **3127** also includes other engines in addition to engine **3132.**

Further, aircraft air management system **3100** can also heat compressed air **3126** depending on the temperature the compressed air relative to the coolant flowing through air heat exchanger **3102** to heat or cool heated air **3120** from compressor **3107.** In this manner, compressed air **3126** can be managed for use in fuel cell stack **3105** by heating and cooling compressed air **3126** depending on the temperature of compressed air **3126** relative to the coolant in air heat exchanger **3102.** In this manner, the temperature of compressed air **3126** reaching fuel cell stack **3105** can be managed to have a temperature that is sufficiently close to the temperature of fuel cell stack **3105** that enables a desired level of electricity generation. This type of management of compressed air **3126** reaching fuel cell stack **3105** is performed to avoid increases in temperature gradients that reduces the efficiency in generating electricity. As result, compressed air **3126** can be heated or cooled to have a temperature relative to the operating temperature for fuel cell stack **3105** that provides a desired level of electricity generation.

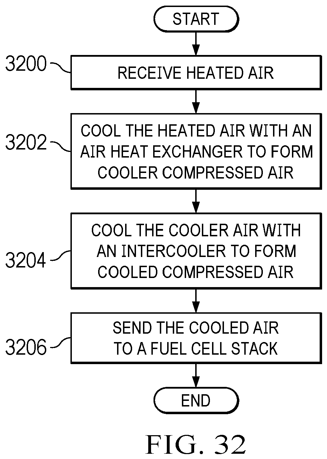

Turning next to **Figure 32****,** an illustration of a flowchart of a process for air management is depicted in accordance with an illustrative embodiment. The process in **Figure 32** can be implemented in hardware, software, or both. For example, the process can be implemented in fuel cell stack startup system **1900** in **Figure 19****.**

The process begins by receiving heated air (operation **3200**). The process cools the heated air with an air heat exchanger to form cooler compressed air (operation **3202**).

The process cools the cooler air with an intercooler to form cooled compressed air (operation **3204**). The process sends the cooled air to a fuel cell stack (operation **3206**). The process terminates thereafter.

In **Figure 32****,** the air heat exchanger, the intercooler, and the fuel cell stack are located in a nacelle for an engine of an aircraft. Ambient air is directed via the nacelle inlet, into the compressor, where the pressure is increased. The air, now having higher pressure and temperature, is ducted to the charge air heat exchanger where it is conditioned toward fuel cell stack temperature by exchanging heat with the fuel cell stack cathode outlet.

The temperature of the air is then further conditioned toward fuel cell stack temperature via exchanging heat with the fuel cell stack coolant in the charge air intercooler, after which, it is delivered to the stack. Within the fuel cell stack, the oxygen within the air reacts with the hydrogen as it moves across the individual fuel cells. Exiting the stack, the vitiated air also removes some amount of the water product to keep the fuel cell stack from flooding.

The air, once exhausted from the stack, passes through the charge air heat exchanger. The air then goes through the turbine, where the air is expanded to recover energy to utilize toward the compression process, and finally, exits the nacelle as exhaust air.

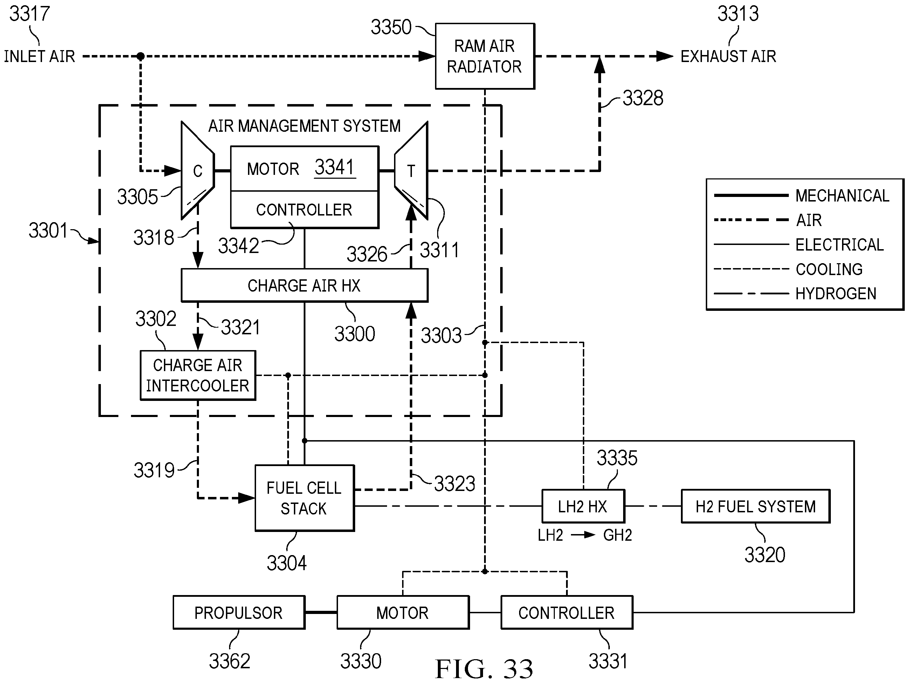

With reference now to **Figure 33****,** an illustration of a schematic diagram of an aircraft air management system is depicted in accordance with an illustrative embodiment. Air management system **3301** operates to cool fuel cell stack **3304.** In this example, air management system **3301** includes charge air exchanger (HX) **3300** and charge air intercooler **3302** and conduit system **3303.** Air management system **3301** also includes compressor (C) **3305,** turbine (T) **3311,** motor **3341,** and controller **3342.**

In this example, the compressor (C) **3305** receives inlet air **3317** that enters the nacelle and generates compressed air **3318** that has a higher pressure than inlet air **3317.** In this example, compressor **3305** is operated by motor **3341** under the control of controller **3342.** Further, compressed air **3318** has a higher temperature that may be higher than desired for use in fuel cell stack **3304.** This compressed air can be cooled to form cooled compressed air **3319** using charge air heat exchanger (HX) **3300** and charge air intercooler **3302.** Charge air heat exchanger (HX) **3300** initially cools compressed air **3318** to form cooler air **3321.** This cooler compressed air can be further cooled by charge air intercooler **3302** providing further cooling to form cooled compressed air **3319.** As a result, cooled compressed air **3319** is compressed air that can have a desired temperature for use with fuel cell stack **3304.**

Cooled compressed air **3319** can be used with gaseous hydrogen received from hydrogen (H2) fuel system **3320** in fuel cell stack **3304** to generate electricity that is used to power components such as motor **3341** and controller **3331.** Motor **3341** in turn provides mechanical energy for rotating propulsor **3362.** Hydrogen fuel system **3320** can include liquid hydrogen tanks, a recirculating system, a cooling system, and other components. In this example, a liquid hydrogen heat exchanger converts liquid hydrogen to gaseous hydrogen for use in fuel cell stack **3304.**

In this example, the compressed air **3323** flowing through fuel cell stack **3304** is routed to charge air heat exchanger **3300,** which heats this air as part of a process of cooling compressed air received from compressor **3305** to form heated air **3326.** This heated air is used to turn turbine **3311.** In this manner, some energy recovery can occur using turbine **3311.** Air **3328** from turbine **3311** is then routed and exits the engine as exhaust air **3313.**

A thermal management system operates to remove the heat from the fuel cell stack **3304,** motor **3341,** and controller **3331,** while the ram air radiator **3350** rejects that heat to ambient air. The thermal management system warms and gasifies the liquid hydrogen fuel using liquid hydrogen heat exchanger (LH2 HX) **3335** for use in fuel cell stack **3304.**

### 5. FUEL CELL AIRCRAFT THERMAL MANAGEMENT SYSTEM

Both low temperature proton exchange membrane (LTPEM) fuel cells and high temperature proton exchange membrane (HTPEM) fuel cells present a zero carbon emissions method for powering aircraft. Further, these types of fuel cells also can provide a high-efficiency manner of generating at least one of propulsive power or electrical power for aircraft systems.

The lower operating temperature as compared to conventional turbomachinery makes for large and heavy thermal management system (TMS) designs. The illustrative examples provide features for managing and rejecting the heat generated by fuel cell propulsion systems on board aircraft while reducing undesired impacts on performance.

High temperature proton exchange membrane (HTPEM) technology can be used to provide higher thermal driving potential that enables significant downsizing of the thermal management system. In this example, thermal driving potential is the temperature difference between the ambient air and coolant exiting the fuel cell. Other electric propulsion components such as motors, their controllers, and other power electronics, however, typically operate at temperatures much closer to that of LTPEM fuel cells. HTPEM fuel cell powered aircraft, therefore, can use a different approach for thermal management beyond that of having a single shared system for all electric propulsion components.

In this illustrative example, a dual loop architecture is employed to maintain separate temperature control of the HTPEM fuel cell stack and the lower temperature motors and controllers within the nacelle used for the fuel cell air management system, the cooling fans, and propulsion. In other words, one loop can be used for the HTPEM fuel cell stack and another loop can be used for generator components other than the fuel cell stack. These heat generating components can be motors, controllers, and power electronics in the nacelle.

In one example, the low temperature (LT) cooling loop comprises coolant that cools heat generating components. These heat generating components are also referred to as heat loads. The coolant in this loop is cooled by the heat capacity of the liquid hydrogen fuel on board. This type of cooling enables sufficient heat to be available to gasify the liquid hydrogen for the fuel cell stack. This type of cooling can also remove the need for a dedicated nacelle heat exchanger for the lower temperature, liquid-cooled components within the nacelle.

A high temperature (HT) loop comprises a coolant that is used to manage the temperature of the fuel cell stack. This management temperature can include at least one of heating or cooling the fuel cell stack to maintain the fuel cell stack at an operating temperature. In these examples, a range of operating temperatures can be present.

In this example, the high temperature loop includes a nacelle heat exchanger. This heat exchanger is a different heat exchanger used in the low temperature loop in the nacelle of the engine. The use of separate low temperature (LT) and high temperature (HT) cooling loops to cool the fuel cell stacks and the lower temperature heat loads. The lower temperature heat loads are heat loads that have a lower temperature than the fuel cell stack. These separate cooling loops remove the need for a separate low temperature heat exchanger to increase efficiency and effectiveness in cooling components by reducing the mass and drag caused by the thermal management system.

Turning next to **Figure 34****,** an illustration of a block diagram of an aircraft thermal management system is depicted in accordance with an illustrative embodiment. In this illustrative example, aircraft thermal management system **3400** can be implemented in aircraft **400** in **Figure 4** to provide thermal management during operation of fuel cell stacks and other components that generate heat in engines **406** in **Figure 4****.** In this example, aircraft thermal management system **3400** provides cooling for fuel cell stack **3405** and a number of heat loads **3416.** In this example, fuel cell stack **3405** comprises high temperature proton exchange membrane fuel cells. The number of heat loads **3416** comprises at least one of an electric motor, a power circuit, a controller, power electronics, or some other component that generates heat.

In this illustrative example, aircraft thermal management system **3400** comprises high temperature loop **3401** and low temperature loop **3402.** High temperature loop **3401** and low temperature loop **3402** are located in conduit system **3403.**

High temperature loop **3401** is configured to manage temperature **3410** of fuel cell stack **3405** in nacelle **3406** using a nacelle heat exchanger **3421.** In managing temperature **3410** of fuel cell stack **3405,** high temperature loop **3401** is configured to maintain fuel cell stack **3405** at operating temperature **3411.** Maintaining temperature **3410** can include at least one of cooling or heating fuel cell stack **3405.** Operating temperature **3411** can be one or more temperatures and can be a range of temperatures within operating temperature limit **3419.** In this example, operating temperature limit **3419** is the maximum or minimum temperature at which fuel cell stack **3405** can operate.

In this example, high temperature loop **3401** can remove heat from fuel cell stack **3405** using coolant **3430** in high temperature loop **3401.** Coolant **3430** can be cooled using nacelle heat exchanger **3421** to a temperature that is sufficient to cool or heat fuel cell stack **3405** such that temperature **3410** for fuel cell stack **3405** is at operating temperature **3411** that is within operating temperature limit **3419** for fuel cell stack **3405.**

In this example, heat is removed in response to operating temperature **3411** being greater than operating temperature limit **3419.** With this example, coolant **3430** has a temperature that is lower than operating temperature **3411.** In this case, heat is removed from fuel cell stack **3405** and is sent into ambient air as part of the exhaust air exiting nacelle **3406.** Heat can be added to fuel cell stack **3405** in response to operating temperature **3411** being lower than operating temperature limit **3419.** In other words, coolant **3430** can be warmer than operating temperature limit **3419.** For example, coolant **3430** can be warmer than operating temperature limit **3419** during startup of fuel cell stack.

Low temperature loop **3402** is configured to cool a number of heat loads **3416** in nacelle **3406** using heat capacity **3407** of liquid hydrogen **3408.** In this example, heat capacity **3407** of liquid hydrogen **3408** can be used to cool coolant **3430** in low temperature loop **3402** for use in cooling the number of heat loads **3416.**

The heat capacity of liquid hydrogen **3408** is the energy needed to convert liquid hydrogen **3408** into gaseous hydrogen **3445.** The conversion of liquid hydrogen **3408** into gaseous hydrogen **3445** cools. As result, this cooled coolant can be used to cool heat loads **3416.**

In this illustrative example, in adding or removing heat to fuel cell stack **3405** exhaust air using charge air heat exchanger **3420,** heated compressed air **3440** generated by compressor **3441** can be conditioned in conduit system **3403** by charge air heat exchanger **3420** to form compressed air near operating temperature **3411.** This compressed air is sent into the fuel cell stack **3405** for use with gaseous hydrogen **3445** to generate electricity.

In one illustrative example, air intercooler **3460** can also be present. With this example, air intercooler **3460** can receive cooled compressed air **3444** from charge air heat exchanger **3420** through conduit system **3403** and further condition cooled compressed air **3444** and send cooled compressed air **3444** near operating temperature **3411** into the fuel cell stack **3405.** Cooled compressed air **3444** reacts with gaseous hydrogen **3445** in fuel cell stack **3405** to generate electricity.

In this illustrative example, heated compressed air **3440** can be based on temperature **3410** a fuel cell stack **3405.** If heated compressed air **3440** is too far above operating temperature **3411** for fuel cell stack 3405, then heated compressed air **3440** is cooled. If the heated compressed air **3440** is too far below operating temperature **3411** for fuel cell stack **3405,** then heated compressed air **3440** is heated. When the temperature is too far below or above can be determined using thresholds.

The ability to heat or cool heated compressed air **3440** can be controlled by the coolant temperature. The coolant temperature can be controlled by at least one of the coolant pump speed or changing the amount of air flow through the nacelle heat exchanger **3421.**

Thus, in this illustrative example, high temperature loop **3401** operates to cool fuel cell stack **3405.** In some cases, this loop can heat fuel cell stack **3405** such as during the startup of fuel cell stack **3405.** In a separate loop, low temperature loop **3402** operates to a set of cool heat loads **3416.** As result, these two loops can provide flexibility cooling different components that may need different levels of cooling.

Further, the illustrative example enables conditioning air for use with gaseous hydrogen **3445** in fuel cell stack **3405** to generate electricity. This conditioning of the air from compressor 3441 can include at least one of heating or cooling depending on the temperature of heated compressed air **3440** and temperature **3410** of fuel cell stack **3405.**

The block diagram illustration of aircraft thermal management system **3400** in **Figure 34** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, nacelle **3406** can include one or more fuel cell stacks in addition to fuel cell stack **3405** in another illustrative example. In another example, another heat exchanger such as an intercooler can be used with charger heat exchanger **3422** to further cool heated compressed air **3440.**

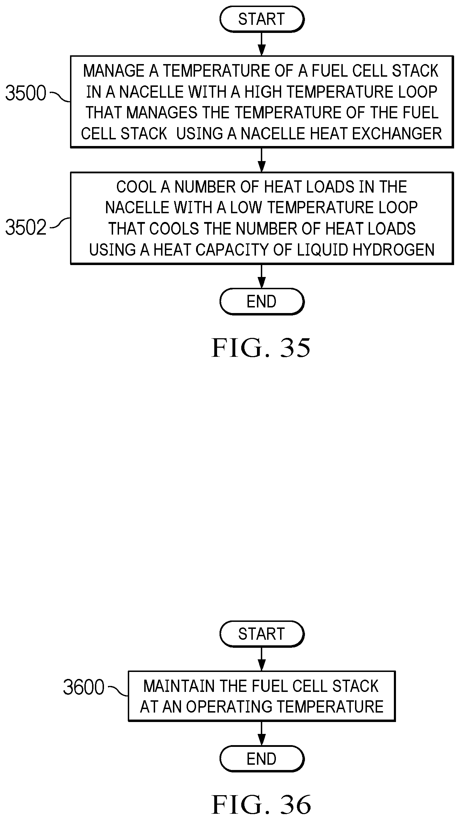

Turning next to **Figure 35****,** an illustration of a flowchart of a process for thermal management is depicted in accordance with an illustrative embodiment. The process in **Figure 35** can be implemented in hardware, software, or both. For example, the process can be implemented in aircraft thermal management system **3400** in **Figure 34****.**

The process begins by managing a temperature of a fuel cell stack in a nacelle using a nacelle heat exchanger in a high temperature loop (operation **3500**).

The process cools a number of heat loads fuel cell stack in a nacelle using in a low temperature loop cools that the number of heat loads using a heat capacity of liquid hydrogen (operation **3502**). The process terminates thereafter.

Referring now to **Figure 36****,** an illustration of a flowchart of a process for managing the temperature of a fuel cell stack is depicted in accordance with an illustrative embodiment. The process in this figure is an example of an implementation for operation **3500** in **Figure 35****.**

The process maintains the fuel cell stack at an operating temperature (operation **3600**). The process terminates thereafter. In operation **3600** air is heated by the coolant such that the fuel cell stack remains at an operating temperature. This operating temperature can be a range of temperatures in which fuel cell stack **3405** operates to generate electricity. Further, the operating temperature may be a temperature that provides the desired level of electricity generation. In other words, other temperatures may be present at which fuel cell stack **3405** can generate electricity but not with a desired level.

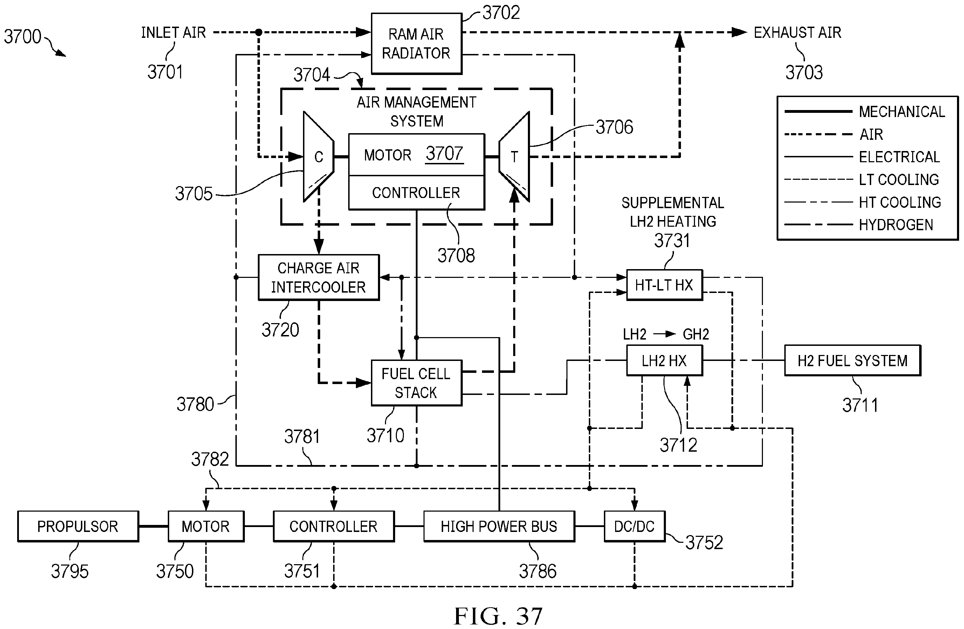

With reference now to **Figure 37****,** an illustration of a thermal management system with a high temperature loop **3781** and a low temperature loop **3782** is depicted in accordance with an illustrative embodiment. This figure illustrates the layout of the hardware contained within a single nacelle for a high temperature proton exchange membrane (HTPEM) configuration. The fuel cell stack in this example is supplied air from the air management system and hydrogen from the fuel system and generates power in turn. That power is used to power an electric motor via its controller, which in turn spins the propeller.

As depicted, thermal management system **3700** is located in a nacelle of an engine. This system has high temperature loop **3781** and low temperature loop **3782.** High temperature loop **3781** uses the ram air radiator **3702** to remove heat from fuel cell stack **3710.**

Low temperature loop **3782** uses the heat capacity of liquid hydrogen in hydrogen fuel system **3711** to cool heat loads with lower heat generation than fuel cell stack **3710.** In other words, low temperature loop **3780** cools coolant heated by these heat loads as part of a process to generate gaseous hydrogen from liquid hydrogen in hydrogen fuel system **3711.**

As depicted, inlet air **3701** passes through ram air radiator **3702** to cool coolant that is part of a high temperature cooling loop. In this example, the coolant is used to cool fuel cell stack **3710.** The result of this cooling is exhaust air **3703,** which has increased temperature in comparison to inlet air **3701.**

As depicted, air management system **3704** comprises compressor **3705,** turbine **3706,** motor **3707,** and controller **3708.** The air management system can be used to generate compressed air for use in fuel cell stack **3710.** This air can be used with gaseous hydrogen from hydrogen (H2) fuel system **3711** to generate electricity. Liquid hydrogen from hydrogen fuel system **3711** is converted into gaseous hydrogen using liquid hydrogen heat exchanger (LH2 HX) **3712.**

In this example, inlet air **3701** is received at the nacelle inlet as ambient air and is directed to compressor **3705** and ram air radiator **3702.**

At compressor **3705,** the air pressure of the air is increased to form compressed air. The compressed air also has a higher temperature. This compressed air is sent to charge air intercooler **3720** where the compressed air is conditioned toward fuel cell stack temperature by exchanging heat with the high temperature HT coolant. The air can be conditioned by heating or cooling the air depending on the temperature of the compressed air. This conditioning can include at least one of heating or cooling by charge air intercooler **3720.** The heating or cooling is based on the temperature of the coolant relative to the temperature of the compressed air.

This conditioned air is sent to fuel cell stack **3710.** Within the fuel cell stack **3710,** the oxygen in conditioned air is reacted with gaseous hydrogen as it moves across the individual fuel cells in fuel cell stack **3710.**

Air exits fuel cell stack **3710.** This air is vitiated and can include some amount of the water product to keep fuel cell stack **3710** from flooding. The air, once exhausted from fuel cell stack **3710** passes through turbine **3706.** The air becomes expanded to recover energy for use in the compression process and is exhausted as exhaust air **3703.**

Ram air radiator **3702** removes heat from the high temperature coolant in high temperature loop **3781** and heats the air before the air is exhausted in exhaust air **3703.**

Hydrogen is stored in a liquid form within the tanks of hydrogen fuel system **3711.** This liquid hydrogen is distributed through fuel lines into the LH2 HX **3712.** This component heats the liquid hydrogen to form gaseous hydrogen. The heating of gaseous hydrogen is performed using heat exchange with the low temperature coolant in low temperature loop **3782.** The gaseous hydrogen can then be sent to fuel cell stack **3710.**

In this example, high temperature (HT) loop **3781** utilizes a liquid coolant that flows through fuel cell stack **3710** to remove the heat generated during the fuel cell reaction. The heated coolant is sent to ram air radiator **3702,** where heat in the coolant is rejected to the ambient air passing through ram air radiator **3702.**

The low temperature loop **3782** uses a liquid coolant to remove heat from the low temperature heat loads. These heat loads can be, for example, motor **3750,** controller **3751,** and other power electronics such as DC-to-DC (DC/DC) converter **3752.** Heat in this coolant can be transferred into liquid hydrogen at LH2 HX **3712** to gasify the liquid hydrogen.

In this example, motor **3750** turns propulsor **3795.** High power bus **3786** connects fuel cell stack **3710** to other electrical components.

In some cases, these heat loads do not generate sufficient heat to gasify a sufficient amount of hydrogen fuel. In this case, high-temperature-to-low-temperature heat exchanger (HT-LT HX) **3731** can perform supplemental heating of the hydrogen. In this example, HT-LT HX **3731** can transfer heat from the high temperature coolant to the low temperature coolant to avoid insufficient liquid hydrogen gasification and subsequently, a fuel cell stack being damaged by thermal shock.

High temperature loop **3781** in thermal management system **3700** operates to remove the heat from the fuel cell, while ram air radiator **3702** rejects that heat to ambient air.

The LH2 HX **3712** operates to remove the heat from the low temperature coolant and low temperature loop **3782,** and in turn cooling heat loads such as motor **3750** and controller **3751,** while also warming and gasifying the hydrogen fuel before it enters fuel cell stack **3710.** HT-LT HX **3731** operates to supply additional heat that is used to warm the hydrogen fuel when the lower heat loads do not provide sufficient heat. In one illustrative example, this feature can be implemented in the innermost nacelle of each wing.

### 6. LIQUID HYDROGEN FEED SYSTEM FOR FUEL CELL POWERED AIRCRAFT

In this illustrative example, hydrogen for a fuel cell powered aircraft is stored as a liquid. Hydrogen can be stored as a liquid at approximately -218 °C, i.e., about -424 F. The storage tanks are liquid hydrogen tanks such as cryogenic tanks that store the hydrogen under pressure. Different techniques can be used to maintain pressure in the liquid hydrogen tanks, ensure venting can be performed safely without freezing the vent outlet, and direct the vent gases away from the aircraft. This venting of gases avoids undesired tank overpressure.

Maintaining pressure in the fuel tanks can be accomplished by tapping of liquid hydrogen from the common feed lines, running the liquid hydrogen through a heat exchanger then compressing to 0,34 bar, i.e., about 5 psi, and pump the liquid hydrogen back to the top of the tank. The system can be turned on and off based on a set of pressure transducers operating with voting logic (the majority of the pressure sensors have to be below the pressurization system turn-on point).

Liquid hydrogen tanks can use a venting system to prevent overpressure due to ambient thermal heat leak. Due to the highly flammable nature of hydrogen, the vent system can include a flame arrestor at the end to prevent a back flash up the vent line in the event of vented hydrogen ignition. The design of a flame arrestor works to trap water in the narrow passages. If the pulse of warm hydrogen is vented prior to the opening of the relief valve, this operation will push any water out of the flame arrestor. This process is performed to avoid water freezing in the flame arrestor by the cryogenic temperature from venting hydrogen and blocking a flow through the flame arrestor.

In addition to the push of water, a heater can be added to the flame arrestor to prevent ice buildup when ambient temperature could cause freezing.

The illustrative examples recognize that a concern for safe venting of hydrogen gas is to vent the gas in a manner that hydrogen gas will not impinge on the aircraft and not become trapped under the aircraft when the aircraft is on the ground. A reason for not wanting to impinge on the aircraft is if the vent gases ignited, damage can occur to the skin of the aircraft where contacted.

In the illustrative example, by venting the hydrogen gases out of the top of the vertical stabilizer, the vent gases will not impinge on any aircraft surface and will warm to the point of being less dense than air so it will rise when on the ground.

Due to the temperature of liquid hydrogen, there are only two substances known that will remain a gas. Those substances are hydrogen (at or above the vapor pressure of the liquid hydrogen) and helium.

With respect to the ability to purge vent hydrogen, a first step includes performing a pressure cycle of warm hydrogen gas to bring the system to about -160 °C, i.e., about -320 F. At this temperature, nitrogen gas can be safely used to finish the warming and inerting of the system.

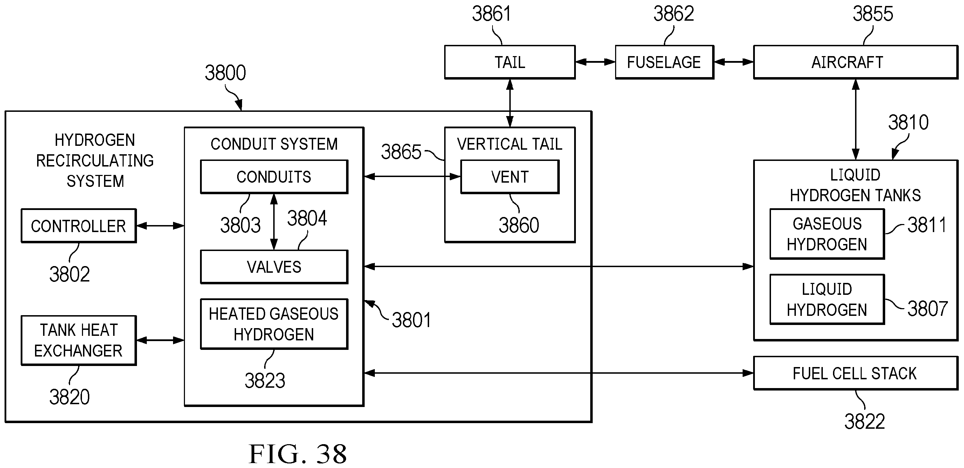

With reference next to **Figure 38****,** illustration of a hydrogen recirculating system is depicted in accordance with an illustrative embodiment. In this illustrative example, hydrogen recirculating system **3800** can be implemented in aircraft **400** in **Figure 4** to recirculate hydrogen from a set of liquid hydrogen tanks **408** in **Figure 4****.** In this example, liquid hydrogen **3807** is stored in the set of liquid hydrogen tanks **3810.**

In this illustrative example, hydrogen recirculating system **3800** comprises conduit system **3801** and controller **3802.** In this example, conduit system **3801** is connected to the set of liquid hydrogen tanks **3810** for aircraft **3855.** Conduit system **3801** comprises conduits **3803** and valves **3804.**

Conduit system **3801** includes conduits and valves. The valves can be controlled by controller **3802** to route fluids along different routes or loops. Controller **3802** is a hardware system and may include software.

In one illustrative example, controller **3802** can control conduit system **3801** to remove gaseous hydrogen **3811** from the set of liquid hydrogen tanks **3810.** In one illustrative example, controller **3802** controls conduit system **3801** to perform a number of different operations. For example, controller **3802** sends gaseous hydrogen **3811** to tank heat exchanger **3820.** Gaseous hydrogen **3811** is heated by tank heat exchanger **3820** to form heated gaseous hydrogen **3823.** This tank heat exchanger can be, for example, LH2 HX **3712** in **Figure 37****.** Controller **3802** sends a first portion of the heated gaseous hydrogen to fuel cell stack **3822.** Controller **3802** returns a second portion of heated gaseous hydrogen **3823** to the set of liquid hydrogen tanks **3810.**

In this example, the second portion of heated gaseous hydrogen **3823** is an amount of the heated gaseous hydrogen **3823** that maintains a pressure level in the set of liquid hydrogen tanks **3810** that enables a flow of liquid hydrogen **3807** to the fuel cell stack **3822.** This flow of liquid hydrogen **3807** comprises liquid hydrogen **3807** flowing from the set of liquid hydrogen tanks **3810** and being converted into gaseous hydrogen **3811** and being heated for use in fuel cell stack **3822.** This type of flow can be used when the second portion of heated gaseous hydrogen **3823** is not present in a sufficient amount needed for use in fuel cell stack **3822.**

Further, controller **3802** can control pressure in liquid hydrogen tanks **3810.** For example, controller **3802** can send gaseous hydrogen **3811** in the set of liquid hydrogen tanks **3810** through conduit system **3801** to vent **3860** in response to pressure in the set of liquid hydrogen tanks **3810** being greater than a specified tolerance. In this example, vent **3860** is considered a part of hydrogen recirculating system **3800.** Thus, in this example, excess gaseous hydrogen is sent from the set of liquid hydrogen tanks **3810** to vent **3860** in aircraft **3855** in response to a pressure in the set of liquid hydrogen tanks **3810** being greater than a tolerance.

Vent **3860** can be in different locations on aircraft **3855.** For example, vent **3860** can be located in tail **3861** of fuselage **3862** of aircraft **3855.** For example, vent **3860** can be located in vertical tail **3865** on tail **3861** of fuselage **3862.** Vertical tail **3865** is a vertical stabilizer connected to tail **3861** of fuselage **3862.**

In another illustrative example, controller **3802** can perform similar operations with respect to liquid hydrogen **3807** stored in the set of liquid hydrogen tanks **3810.** Liquid hydrogen **3807** can be used to maintain a desired level of pressure in the set of liquid hydrogen tanks **3810.** This use of liquid hydrogen **3807** can be used in place of or in addition to performing operations with gaseous hydrogen **3811** to maintain a desired pressure level.

In this example, controller **3802** can control conduit system **3801** to perform operations. For example, controller **3802** removes liquid hydrogen **3807** from the set of liquid hydrogen tanks **3810** and send liquid hydrogen **3807** to tank heat exchanger **3820** to form heated gaseous hydrogen **3823.** Controller **3802** can send a first portion of heated gaseous hydrogen **3823** to fuel cell stack **3822** and return a second portion of the heated gaseous hydrogen **3823** to the set of liquid hydrogen tanks **3810.**

For example, vent **3860** may be in another location. In another illustrative example, vent **3860** can be in another stabilizer in vertical tail **3865.** In yet another illustrative example, the vent can be located on a wing for aircraft **3855.**

The block diagram illustration of hydrogen recirculating system **3800** in **Figure 38** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

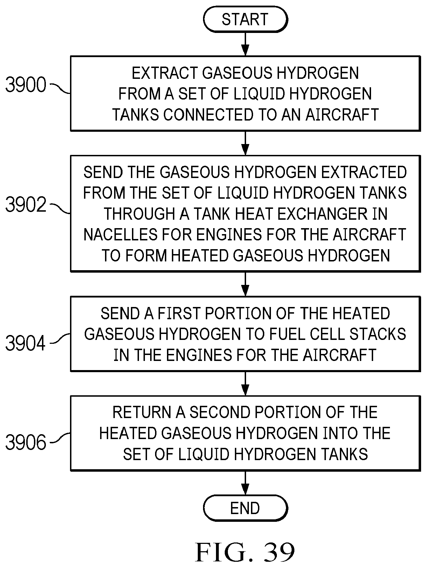

With reference to **Figure 39****,** an illustration of a flowchart of a process for recirculating hydrogen is depicted in accordance with an illustrative embodiment. The process in **Figure 39** can be implemented in hardware, software, or both. For example, the process can be implemented in hydrogen recirculating system **3800** in **Figure 38****.** This process can be used to manage liquid hydrogen in liquid hydrogen tanks for an aircraft.

The process begins by extracting gaseous hydrogen from a set of liquid hydrogen tanks connected to an aircraft (operation **3900**). The process sends the gaseous hydrogen extracted from the set of liquid hydrogen tanks through a tank heat exchanger in nacelles for engines for the aircraft to form heated gaseous hydrogen (operation **3902**)

The process sends a first portion of the heated gaseous hydrogen to fuel cell stacks in the engines for the aircraft (operation **3904**). The process returns a second portion of the heated gaseous hydrogen into the set of liquid hydrogen tanks (operation **3906**). The process terminates thereafter.

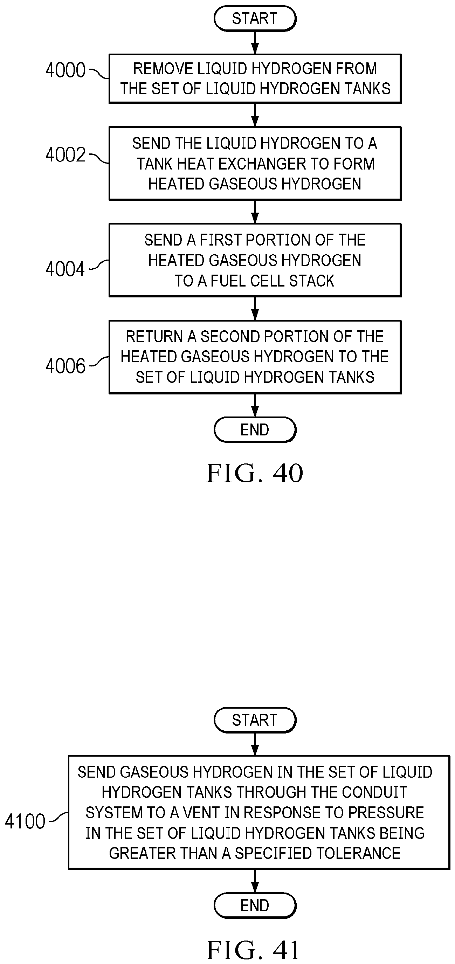

With reference to **Figure 40****,** an illustration of a flowchart of a process for recirculating hydrogen is depicted in accordance with an illustrative embodiment. The process in **Figure 40** can be implemented in hardware, software, or both. For example, the process can be implemented in hydrogen recirculating system **3800** in **Figure 38****.** This process can be used to manage liquid hydrogen in liquid hydrogen tanks for an aircraft.

The process removes liquid hydrogen from the set of liquid hydrogen tanks (operation **4000**). The process sends the liquid hydrogen to a tank heat exchanger to form heated gaseous hydrogen (operation **4002**).

The process sends a first portion of the heated gaseous hydrogen to a fuel cell stack (operation **4004**). The process returns a second portion of the heated gaseous hydrogen to the set of liquid hydrogen tanks (operation **4006**). The process terminates thereafter.

With reference to **Figure 41****,** an illustration of a flowchart of a process for recirculating hydrogen is depicted in accordance with an illustrative embodiment. The process in **Figure 41** can be implemented in hardware, software, or both. For example, the process can be implemented in hydrogen recirculating system **3800** in **Figure 38****.** This process can be used to manage liquid hydrogen in liquid hydrogen tanks for an aircraft.

The process sends gaseous hydrogen in the set of liquid hydrogen tanks through the conduit system to a vent in response to pressure in the set of liquid hydrogen tanks being greater than a specified tolerance (operation **4100**). The process terminates thereafter.

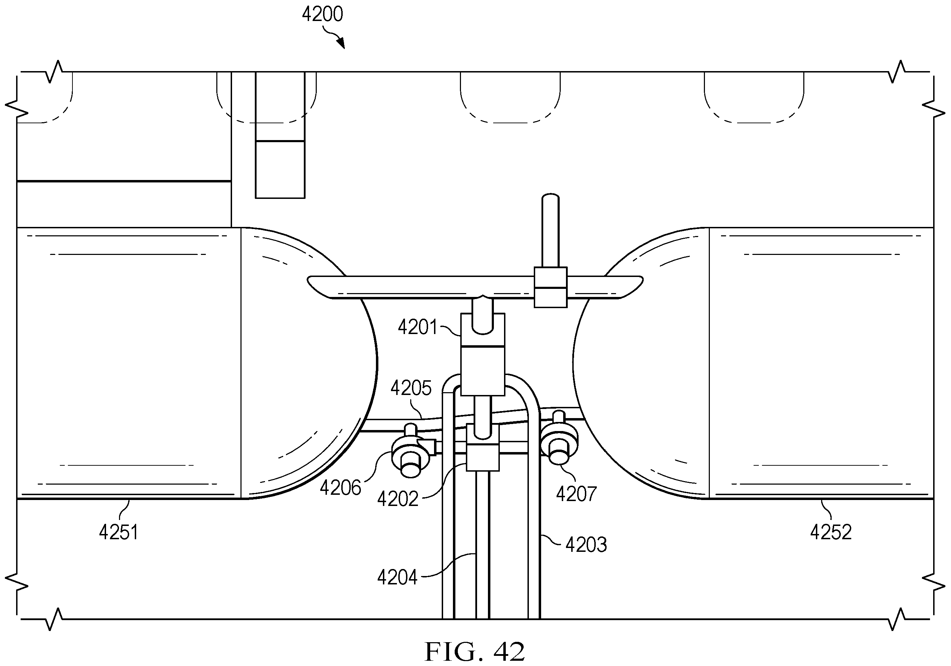

Turning next to **Figure 42****,** an illustration of a recirculating system for liquid hydrogen for tank pressure control is depicted in accordance with an illustrative embodiment. As shown in this example, recirculating system **4200** for recirculating gaseous hydrogen (GH2) can be performed for controlling the temperature within liquid hydrogen tank **4251** and liquid hydrogen tank **4252**.

This process can include pulling gaseous hydrogen from the top of the liquid hydrogen tanks and then sending the gaseous hydrogen through a heat exchanger **4201** while traveling down towards the wing. Heat exchanger **4201** has heat from the low temperature coolant line **4203** from the engines.

The gaseous hydrogen is split into two portions after heat exchanger **4201** at flow control valve **4202.** In this example, with most of the gaseous hydrogen going towards fuel cells stacks through line **4204** and some of the gaseous hydrogen being pumped by gaseous hydrogen pump **4206** and gaseous hydrogen pump **4207** back into the liquid hydrogen tanks through return line **4205.** Returning heated gaseous hydrogen back to the liquid hydrogen tanks affects how much liquid hydrogen (LH2) is boiled off in the liquid hydrogen tanks and affects the tank pressure. In this example, the more boil-off results in a greater pressure increase.

In one example, this process can be performed as follows:
1. Extract gaseous hydrogen from the liquid hydrogen tanks.
2. sending the gaseous hydrogen through heat exchanger **4205** with hot coolant from the fuel cell stack as the heating fluid The hot coolant can be heated by heat loads in a low termperature loop.
3. Output the heated gaseous hydrogen from heat exchanger **4205.**
4. Split the gaseous hydrogen at flow control valve **4202** wherein a portion of the gaseous hydrogen is directed for recirculation in the liquid hydrogen tanks and another portion of the gaseous hydrogen is sent to the fuel cell stacks.
5. Directing the portion of the gaseous hydrogen for recirculation to gaseous hydrogen pump **4206** and gaseous hydrogen pump **4207** for return to the liquid hydrogen tanks.
6. Returning the gaseous hydrogen back into the liquid hydrogen tanks and bubble through the liquid hydrogen to maintain pressure in the cryogenic tanks

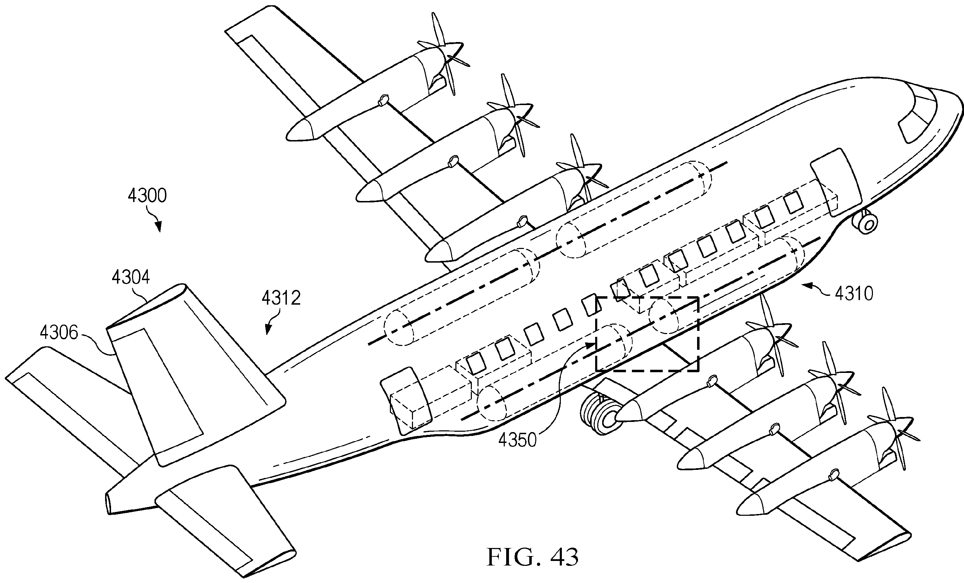

In **Figure 43****,** an illustration of a venting system for gaseous hydrogen is depicted in accordance with an illustrative embodiment. Venting system **4300** provides an ability to vent gaseous hydrogen (GH2) in response to excess pressure. This venting system enables releasing gaseous hydrogen from liquid hydrogen tanks **4310** and removing that gaseous hydrogen from aircraft. During flight, this venting can occur through vent **4304** in vertical tail **4306.** In this example, vent **4304** is connected to liquid hydrogen tanks **4310** by conduit system **4312.**

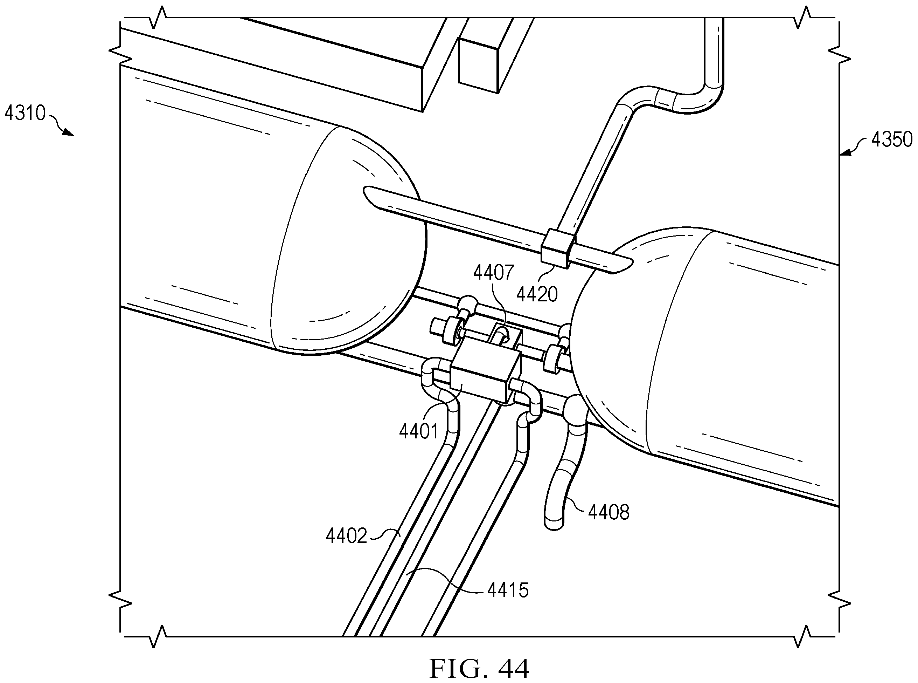

With reference next to **Figure 44****,** an illustration of a system for recirculating gaseous hydrogen for tank pressure control is depicted in accordance with an illustrative embodiment. In the illustrative examples, the same reference numeral may be used in more than one figure. This reuse of a reference numeral in different figures represents the same element in the different figures. This figure is a more detailed view of the components in section **4350** in **Figure 43****.**

This view also shows the components that can be used to recirculate liquid hydrogen (LH2) in addition to components for recirculating gaseous hydrogen. In this example, liquid hydrogen is pulled from the bottom of liquid hydrogen tanks **4310.** Some of the liquid hydrogen is sent to the engine and some of liquid hydrogen is passed through heat exchanger **4401** to warm and phase change to gaseous hydrogen (GH2). Heat exchanger **4401** has heat from the low temperature coolant line **4402** from the engines. The liquid hydrogen is then pumped back into liquid hydrogen tanks **4310.** Heated GH2 being added back to liquid hydrogen tanks **4310** affects how much liquid hydrogen is boiled off in liquid hydrogen tanks **4310** and affects the liquid hydrogen tank pressure.

With respect to performing recirculation with liquid hydrogen, the process can be performed as follows:
1. extract liquid hydrogen from liquid hydrogen tanks **4310;**
2. input liquid hydrogen through heat exchanger **4401** with hot coolant from heat loads such as an engine as the heating fluid;
3. output gaseous hydrogen from heat exchanger **4401;**
4. split the gaseous hydrogen at flow control valve **4407** wherein a portion of the gaseous hydrogen is directed for recirculation in the liquid hydrogen tanks through refill line **4408,** which leads to refuel port for liquid hydrogen tanks **4310** and another portion of the gaseous hydrogen is sent to the fuel cell stacks through fuel cell stack line **4415;**
5. sending the gaseous hydrogen for recirculation to gaseous hydrogen (GH2) pump **4405** and gaseous hydrogen pump **4406;** and
6. returning the portion gaseous hydrogen for recirculation back into liquid hydrogen tanks **4310** and bubbled through the liquid hydrogen to maintain pressure in liquid hydrogen tanks **4310.**

Alternatively, GH2 can also be pulled from the liquid hydrogen tanks **4310** instead of liquid hydrogen and perform a similar process with gaseous hydrogen.

Additionally, pressure relief valve **4420** can provide pressure relief by opening to vent gaseous hydrogen. This valve can open when the pressure is greater than some selected threshold. This gaseous hydrogen can then flow to vent **4304** in vertical tail **4306** in **Figure 43****.**

### 7. PUMPED TWO-PHASE COOLING OF AIRCRAFT ELECTRONICS

Conventional single-phase cooling systems are unable to thermally manage electrified propulsion systems within acceptable size, weight, and power (SWaP) envelopes for use in aircraft such as liquid hydrogen powered aircraft.

Current solutions pump liquid in a cooling loop that uses a ram air radiator. Ram air radiators for electrified propulsion systems and high power electronics are large in size and weight and require large amounts of cooling air flow. This situation results in packaging challenges and potential aerodynamic drag penalties.

These solutions currently used in aircraft are single phase liquid or gaseous cooling solutions that are used for aircraft components such as power electronics, fuel cells, batteries, and electric motors and drives. These solutions are ineffective at dealing with large amounts of heat from these types of electric components that typically operate below 100 degrees centigrade.

In one or more illustrative examples, a series of components comprising a liquid pump, an evaporator, a condenser, and an accumulator can be used to provide desired cooling using a pumped two-phase cooling loop.

In the illustrative example, a fluid is used that undergoes phase change at temperatures and pressures that are suitable for thermal management of aircraft electronics and power systems. The heat sources and heat sink can be designed to operate as evaporators and condensers, respectively.

In the different illustrative examples, a waste heat recovery (WHR) system can be added to the thermal management system downstream of the evaporator. In another illustrative example, a system to generate thrust from ram air that is heated by the condenser can also be used.

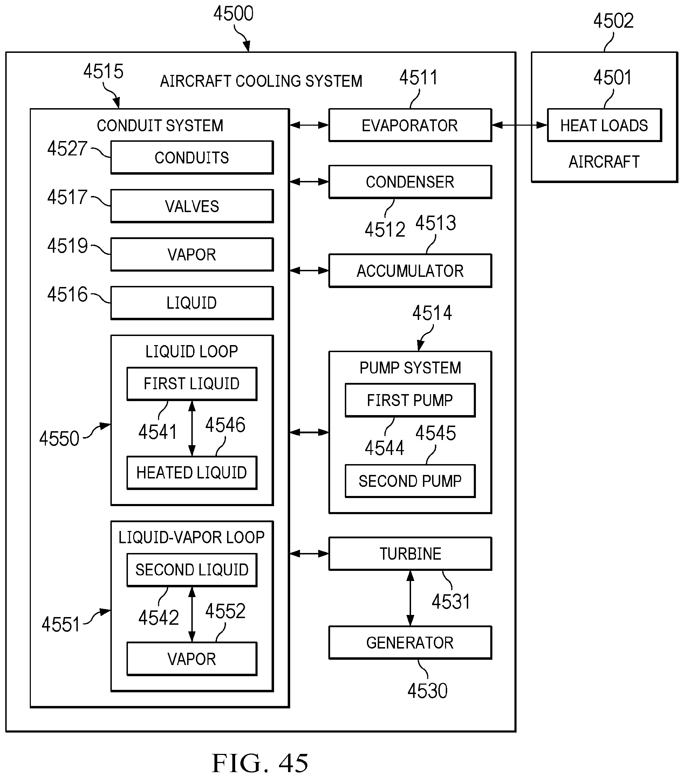

With reference to **Figure 45****,** an illustration of a block diagram of an aircraft cooling system is depicted in accordance with an illustrative embodiment. In this illustrative example, aircraft cooling system **4500** can be implemented in aircraft **400** in **Figure 4** to cool heat loads **4501.** Aircraft cooling system **4500** can be located in a nacelle of an engine of an aircraft.

Heat loads **4501** can take a number of different forms. For example, heat loads **4501** can be selected from at least one of a fuel cell, a fuel cell stack, a power circuit, an electric motor, a computer system, an electronics enclosure, a laser, or some other component that generates heat.

Aircraft cooling system **4500** can take a number of different forms. In one illustrative example, aircraft cooling system **4500** comprises evaporator **4511,** condenser **4512,** accumulator **4513,** and pump system **4514,** and conduit system **4515.** Flow of fluids such as liquid **4516** and vapor **4519** between these different components are facilitated by conduit system **4515.**

Conduit system **4515** comprises conduits **4527** and can also include valves **4517.** Conduit system **4515** is connected to evaporator **4511,** condenser **4512,** accumulator **4513,** and pump system **4514.**

In this example, evaporator **4511** is thermally connected to a set of heat loads **4501** and can cool the set of heat loads **4501** in aircraft **4502** using liquid **4516.** Liquid **4516** forms a vapor **4519** in response to cooling the set of heat loads **4501.**

Condenser **4512** is a hardware component that cools vapor **4519** to form liquid **4516.** In one example, condenser **4512** can be a ram air condenser that uses air entering an inlet of a nacelle or a condenser that does not use ram air. Condenser **4512** receives vapor **4519** and cools vapor **4519** in which cooling vapor **4519** forms liquid **4516.** Further in this example, condenser **4512** rejects heat from the vapor **4519** into nacelle airflow. Nacelle air flow is air flowing through a nacelle that exits the nacelle at the outlet of the nacelle.

In this example, accumulator **4513** receives liquid **4516** from condenser **4512** and stores liquid **4516.** A pump system is a physical system that comprises one or more pumps. Pump system **4514** pumps liquid **4516** stored in accumulator **4513** to evaporator **4511.**

Further, in this example, aircraft cooling system **4500** can also include generator **4530** and turbine **4531.** In this example, turbine **4531** is connected to the generator and to conduit system **4515.** Turbine **4531** is physically connected to generator **4530** and can turn generator **4530** to generate electrical power. Turbine **4531** is connected to conduit system **4515** such that vapor **4519** flows through turbine **4531** to turn turbine **4531.**

Turbine **4531** turns in response to receiving vapor **4519** from evaporator **4511** and causes generator **4530** to generate power and wherein condenser **4512** receives vapor **4519** from turbine **4531.**

In another illustrative example, aircraft cooling system **4500** comprises condenser **4512,** evaporator **4511** and pump system **4514.** With this example, two liquids flow within conduit system **4515,** first liquid **4541** and second liquid **4542.** These two liquids flow separately from each other within conduit system **4515.** In other words, the liquids do not mix. In this example, first pump **4544** in pump system **4514** pumps first liquid **4541** and second pump **4545** in pump system **4514** pumps second liquid **4542.**

In this example, first pump **4544** pumps first liquid **4541** in liquid loop **4550** to a set of heat loads **4501.** The set of heat loads **4501** heats first liquid **4541** in which heating first liquid **4541** forms heated liquid **4546.**

Evaporator **4511** is a separate or partitioned evaporator in which both first liquid **4541** (heated liquid **4546**) and second liquid **4542** can flow through this component without mixing with each other. In this example, evaporator **4511** receives heated liquid **4546** and cools the heated liquid **454.** The cooling of heated liquid **4546** causes second liquid **4542** in liquid-vapor loop **4551** to form vapor **4552.**

Further in this example, condenser **4512** receives vapor **4552** and cool vapor **4552.** Cooling vapor **4552** forms second liquid **4542.** Second pump **4545** pumps second liquid **4542** from condenser **4512** to evaporator **4511.**

The block diagram illustration of aircraft cooling system **4500** in **Figure 45** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

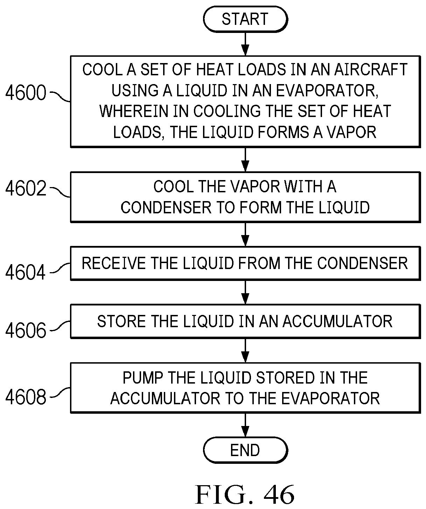

With reference next to **Figure 46****,** an illustration of a flowchart of a process for cooling heat loads is depicted in accordance with an illustrative embodiment. The process in **Figure 46** can be implemented in hardware, software, or both. For example, the process can be implemented in aircraft cooling system **4500** in **Figure 45****.** This process can be used to cool heat loads in an aircraft.

The process cools a set of heat loads in an aircraft using a liquid in an evaporator, wherein in cooling the set of heat loads, the liquid forms a vapor (operation **4600**). The process cools the vapor with a condenser to form the liquid (operation **4602**).

The process receives the liquid from the condenser (operation **4604**). The process stores the liquid in an accumulator (operation **4606**).

The process pumps the liquid stored in the accumulator to the evaporator (operation **4608**). The process terminates thereafter.

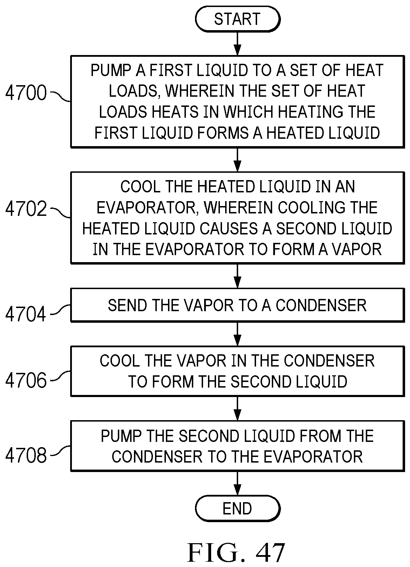

Next in **Figure 47****,** an illustration of a flowchart of a process for cooling heat loads is depicted in accordance with an illustrative embodiment. The process in **Figure 47** can be implemented in hardware, software, or both. For example, the process can be implemented in aircraft cooling system **4500** in **Figure 45****.** This process can be used to heat loads in an aircraft.

The process pumps a first liquid to a set of heat loads, wherein the set of heat loads heats in which heating the first liquid forms a heated liquid (operation **4700**). The process cools the heated liquid in an evaporator, wherein cooling the heated liquid causes a second liquid in the evaporator to form a vapor (operation **4702**).

The process sends the vapor to a condenser (operation **4704**). The process cools the vapor in the condenser to form the second liquid (operation **4706**). The process pumps the second liquid from the condenser to the evaporator (operation **4708**). The process terminates thereafter.

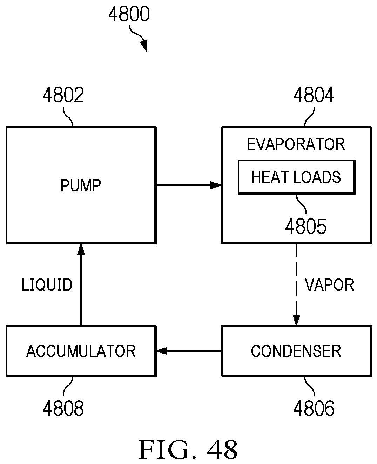

With reference next to **Figure 48****,** an illustration of a pumped two-phase (P2P) cooling loop is depicted in accordance with an illustrative embodiment. As depicted, pumped two-phase cooling loop **4800** comprises pump **4802,** evaporator **4804,** condenser **4806,** and accumulator **4808.** In this example, accumulator **4808** is a reservoir that stores liquid. Pump **4802** can pump liquid from accumulator **4808** to evaporator **4804.** Evaporator **4804** cools a set of heat loads **4805** in the aircraft. The set of heat loads **4805** in the aircraft is selected from at least one of a fuel cell, a fuel cell stack, an electric motor, a computer system, an electronics enclosure, or a laser. The set of heat loads can include a fuel cell , a fuel cell stack, an electronic motor, an electronic enclosure, the computer system, a laser, or other suitable types of components that generate heat.

When cooling these heat loads, evaporator **4804** generates a vapor from the liquid coolant which is sent to condenser **4806.** Condenser **4806** operates via airflow moving through condenser **4806** to cool the vapor from evaporator **4804.** The cooled vapor becomes a liquid that is stored in accumulator **4808,** which can be recirculated by pump **4802** to perform further cooling in pumped two-phase cooling loop **4800.**

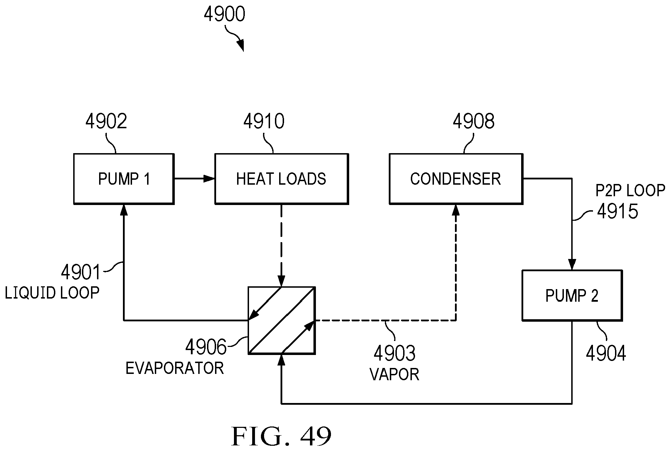

Next in **Figure 49****,** an illustration of a hybrid two-phase (P2P) cooling loop is depicted in accordance with an illustrative embodiment. In this example, hybrid two-phase (P2P) cooling loop **4900** comprises pump 1 **4902,** pump 2 **4904,** evaporator **4906,** and condenser **4908.**

In this example, pump 1 **4902** pumps a first liquid condensed by evaporator **4906** to heat loads **4910** in liquid loop **4901.** Heat loads **4910** heat the first liquid in this example. The heated liquid flows to evaporator **4906,** which is cooled for use by pump 1 **4902.**

This flow of the liquid forms liquid loop **4901** in hybrid two-phase (P2P) cooling loop **4900.** In this instance, evaporator **4906** can be a separate location from heat loads **4910.** For example, evaporator **4906** can be located closer to condenser **4908.**

With this example, a second liquid in evaporator **4906** is heated to form vapor **4903** in two-phase (P2P) loop **4915.** This vapor is sent to condenser **4908.** This type of configuration may be desirable when the second liquid is more volatile or harder to handle. This configuration using two liquids can minimize the usage of a potentially volatile working fluid. Also, this configuration can also be used with a heat load that cannot come into direct contact with the liquid being used as a coolant or refrigerant.

Vapor **4903** is sent to condenser **4908** which cools the vapor to form the second liquid. Pump 2 **4904** pumps the second liquid back to evaporator **4906.** Heat exchange in evaporator **4906** cools the first liquid in liquid loop **4901.**

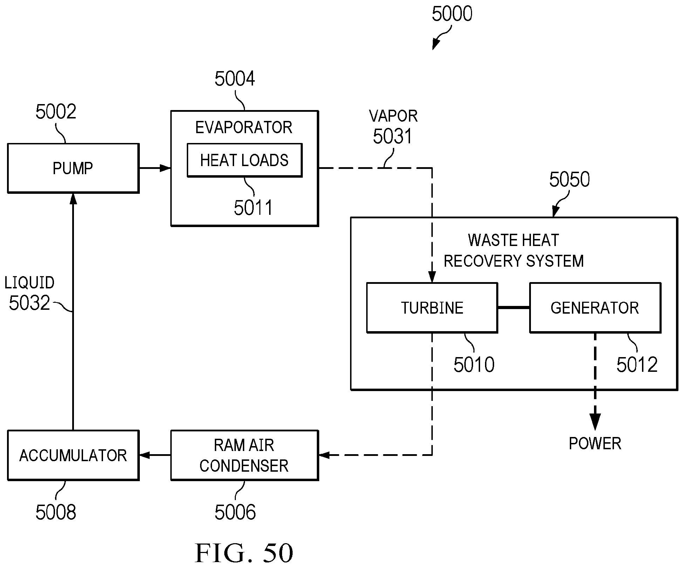

Turning next to **Figure 50****,** an illustration of a pumped two-phase (P2P) cooling loop with waste heat recovery is depicted in accordance with an illustrative embodiment. As depicted, pumped two-phase cooling loop **5000** comprises pump **5002,** evaporator **5004,** condenser **5006,** and accumulator **5008.**

In this example, turbine **5010** is located between evaporator **5004** and condenser **5006.** Liquid sent to evaporator by pump **5002** cools heat loads **5011.** With this example, vapor **5031** generated by evaporator **5004** cooling heat loads **5011** can be used to turn turbine **5010.** Turbine **5010** is connected to generator **5012,** which generates power in response to turbine **5010** using vapor **5031.** Vapor **5031** then flows to condenser **5006** for condensation into liquid **5032** that is stored in accumulator **5008.** As depicted, waste heat recovery system **5050** comprises turbine **5010** and generator **5012.**

Thus, one or more illustrative examples can use this type of cooling system in place of the other cooling systems that use a single phase liquid. A liquid can be selected that will evaporate when cooling a heat load.

Further, vapor 5031 produced by evaporator 5004 can be a superheated gas. Similarly, liquid 5032 produced by condenser 5006 can be subcooled. The terms superheated and subcooled refer to increasing or decreasing the fluid temperature beyond the saturation temperature, respectively.

Some features of the illustrative examples described herein are described in the following clauses. These clauses are examples of features and are not intended to limit other illustrative examples.

Clause 1 - An aircraft thermal management system comprising:
a high temperature loop configured to manage a temperature of a fuel cell stack in a nacelle using a nacelle heat exchanger; and
a low temperature loop configured to cool a number of heat loads in a nacelle using a heat capacity of liquid hydrogen.

Clause 2 - The aircraft thermal management system of Clause 1, wherein the fuel cell stack comprises high temperature proton exchange membrane fuel cells.

Clause 3 - The aircraft thermal management system of Clause 1, wherein in managing the temperature of the fuel cell stack, the high temperature loop is configured to maintain the fuel cell stack at an operating temperature.

Clause 4 - The aircraft thermal management system of Clause 1 further comprises:
a conduit system, wherein the high temperature loop and the low temperature loop are located in the conduit system.

Clause 5 - The aircraft thermal management system of Clause 1, wherein the number of heat loads comprises at least one of an electric motor, a power circuit, power electronics, or a controller.

Clause 6 - The aircraft thermal management system of Clause 1, further comprising:
a compressor configured to generate heated compressed air;
a charge air intercooler is configured to:
   receive the heated compressed air from the compressor; and
   cool the heated compressed air to form cooled compressed air that is sent into the fuel cell stack.

Clause 7 - The aircraft thermal management system of Clause 6, wherein the cooled compressed air reacts with gaseous hydrogen in the fuel cell stack to generate electricity.

Clause 8 - An aircraft thermal management system comprising:
a ram air radiator in a nacelle comprising:
   a nacelle heat exchanger;
   a set of fans configured to increase airflow through the nacelle heat exchanger;
a fuel cell stack in the nacelle;
a conduit system configured to carry a coolant, wherein the conduit system comprises:
   a high temperature loop configured to:
      remove heat from the fuel cell stack; and
      send heat removed from the fuel cell stack into ambient air as part of exhaust air exiting the nacelle; and
   a low temperature loop configured to:
      remove heat from a set of components in the nacelle using a heat capacity of liquid hydrogen.

Clause 9 - The aircraft thermal management system of Clause 8, wherein the fuel cell stack comprises high temperature proton exchange membrane fuel cells.

Clause 10 - The aircraft thermal management system of Clause 8, wherein in removing heat from the fuel cell stack, the high temperature loop is configured to maintain the fuel cell stack at an operating temperature.

Clause 11 - The aircraft thermal management system of Clause 8, wherein the low temperature loop is further configured to:
remove heat from at least one of an electric motor, a power circuit, or a controller.

Clause 12 - The aircraft thermal management system of Clause 8, wherein the ram air radiator comprises a nacelle heat exchanger in a nacelle that is positioned to receive air flowing through an inlet in the nacelle.

Clause 13 - An aircraft comprising:
a fuselage;
a first wing and a second wing connected to the fuselage;
liquid hydrogen tanks configured to store liquid hydrogen, wherein the liquid hydrogen tanks extend along an outside of the fuselage;
engines connected to the first wing and the second wing, wherein each engine in the engines comprises:
   a nacelle;
   an electric motor within the nacelle;
   a fuel cell stack within the nacelle; and
   a ram air radiator within the nacelle, wherein the ram air radiator is configured to receive air flowing through an inlet in the nacelle;
a conduit system;
a high temperature loop in the conduit system, wherein the high temperature loop is configured to:
   manage a temperature of the fuel cell stack using a nacelle heat exchanger; and
   a low temperature loop in the conduit system, wherein the low temperature loop is configured to:
      cool a number of heat loads in the nacelle using a fuel system heat exchanger that cools a coolant using a heat capacity of liquid hydrogen.

Clause 14 - The aircraft of Clause 13, wherein the ram air radiator comprises a nacelle heat exchanger in the nacelle.

Clause 15 - The aircraft of Clause 14, wherein the ram air radiator further comprises a fan system positioned to increase airflow through the nacelle heat exchanger.

Clause 16 - The aircraft of Clause 13, wherein the number of heat loads comprises at least one of an electric motor, a power circuit, power electronics, or a controller.

Clause 17 - A method for thermal management, the method comprising:
managing a temperature of a fuel cell stack in a nacelle with a high temperature loop that managers the temperature of the fuel cell stack using a nacelle heat exchanger; and
cooling a number of heat loads in the nacelle with a a low temperature loop that cools the number of heat loads using a heat capacity of liquid hydrogen.

Clause 18 - The method of Clause 17, wherein the fuel cell stack comprises high temperature proton exchange membrane fuel cells.

Clause 19 - The method of Clause 17, wherein managing the temperature of the fuel cell stack comprises:
maintaining the fuel cell stack at an operating temperature.

Clause 20 - The method of Clause 17, wherein the high temperature loop and the low temperature loop are located in a conduit system.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An aircraft thermal management system (3400, 3700), wherein the aircraft includes a fuel cell stack (4505, 3710) in a nacelle (3406) and a nacelle heat exchanger (3421), the thermal management system (3400, 3700) comprising:
a high temperature loop (3401, 3781) configured to manage a temperature (3410) of the fuel cell stack (4505, 3710) in the nacelle (3406) using the nacelle heat exchanger (3421); and
a low temperature loop (3402, 3782) configured to cool a number of heat loads (3416) in the nacelle (3406) using a heat capacity (3407) of liquid hydrogen stored on board the aircraft.

2. The aircraft thermal management system (3400, 3700) of claim 1, wherein in managing the temperature (3410) of the fuel cell stack (4505, 3710), the high temperature loop (3401, 3781) is configured to maintain the fuel cell stack (4505, 3710) at an operating temperature (3411).

3. The aircraft thermal management system (3400, 3700) of claim 1 or 2 further comprises:
a conduit system (3403), wherein the high temperature loop (3401, 3781) and the low temperature loop (3402, 3782) are located in the conduit system (3403).

4. The aircraft thermal management system (3400, 3700) of any one of claims 1 to 3, wherein the number of heat loads (3416) comprises at least one of an electric motor, a power circuit, power electronics, or a controller.

5. The aircraft thermal management system (3400, 3700) of any one of claims 1 to 4, further comprising:
a compressor (3411, 3705) configured to generate heated compressed air (3440);
a charge air intercooler (3720) configured to:
receive the heated compressed air (3440) from the compressor (3411, 3705); and
cool the heated compressed air (3440) to form cooled compressed air (3444) that is sent into the fuel cell stack (4505, 3710).

6. The aircraft thermal management system (3400, 3700) of claim 5, wherein the cooled compressed air (3444) reacts with gaseous hydrogen (3445) in the fuel cell stack (4505, 3710) to generate electricity.

7. An aircraft thermal management system (3400, 3700) of any one of claims 1 to 6, wherein:
the high temperature loop (3401, 3781) is configured to:
remove heat from the fuel cell stack (4505, 3710);
send heat removed from the fuel cell stack (4505, 3710) into ambient
air as part of exhaust air exiting the nacelle (3406); and
the low temperature loop (3402, 3782) is configured to remove heat from a set of components in the nacelle (3406) using a heat capacity (3407) of liquid hydrogen.

8. An aircraft thermal management system (3400, 3700) of any one of claims 1 to 6, comprising:
a nacelle (3406);
a ram air radiator (3702) in the nacelle (3406) comprising:
a nacelle heat exchanger (3421);
a set of fans configured to increase airflow through the nacelle heat exchanger (3421);
a fuel cell stack (4505, 3710) in the nacelle (3406)

9. The aircraft thermal management system (3400, 3700) of claim 8, wherein the fuel cell stack (4505, 3710) comprises high temperature proton exchange membrane fuel cells.

10. The aircraft thermal management system (3400, 3700) of claim 7, wherein in removing heat from the fuel cell stack (4505, 3710), the high temperature loop (3401, 3781) is configured to maintain the fuel cell stack (4505, 3710) at an operating temperature (3411).

11. The aircraft thermal management system (3400, 3700) of claim 8, wherein the nacelle heat exchanger (3421) in the nacelle (3406) is positioned to receive air flowing through an inlet in the nacelle (3406).

12. An aircraft (199, 400, 3127, 3855, 4502) comprising:
a fuselage (102, 402, 2630, 3140, 3862);
a first wing (403, 2632) and a second wing (405, 2634) connected to the fuselage (102, 402, 2630, 3140, 3862);
liquid hydrogen tanks (108, 408, 2602, 3810, 4310) configured to store liquid hydrogen, wherein the liquid hydrogen tanks (108, 408, 2602, 3810, 4310) extend along an outside of the fuselage (102, 402, 2630, 3140, 3862);
engines (106, 406, 2601) connected to the first wing (403, 2632) and the second wing (405, 2634), wherein each engine in the engines (106, 406, 2601) comprises:
a nacelle (3406);
an electric motor within the nacelle (3406);
a fuel cell stack (4505, 3710) within the nacelle (3406); and
a ram air radiator (3702) within the nacelle (3406), wherein the ram air radiator (3702) is configured to receive air flowing through an inlet in the nacelle (3406); and
an aircraft thermal management system (3400, 3700) according to any one of claims 1 to 11.

13. A method for thermal management of an aircraft including a fuel cell stack (4505, 3710) in a nacelle (3406) and a nacelle heat exchanger (3421), the method comprising:
managing (3500) a temperature (3410) of the fuel cell stack (4505, 3710) in the nacelle (3406) with a high temperature loop (3401, 3781) that uses a nacelle heat exchanger (3421); and
cooling (3502) a number of heat loads (3416) in the nacelle (3406) with a low temperature loop (3402, 3782) that cools the number of heat loads (3416) using a heat capacity (3407) of liquid hydrogen stored on board the aircraft.

14. The method of claim 13, wherein managing the temperature (3410) of the fuel cell stack (4505, 3710) comprises:
maintaining (3600) the fuel cell stack (4505, 3710) at an operating temperature (3411).

15. The method of claim 13 or 14, further comprising:
removing heat from the fuel cell stack (4505, 3710);
sending heat removed from the fuel cell stack (4505, 3710) into ambient air as part of exhaust air exiting the nacelle (3406).
